(19) Europäisches Patentamt
European Patent Office
Office européen des brevets

(11) **EP 4 195 539 B1**

(12) **EUROPEAN PATENT SPECIFICATION**

(45) Date of publication and mention
of the grant of the patent:
**29.04.2026 Bulletin 2026/18**

(21) Application number: **21859541.1**

(22) Date of filing: **17.03.2021**

(51) International Patent Classification (IPC):
**H04L 61/5014** (2022.01)

(52) Cooperative Patent Classification (CPC):
**H04L 61/5014; H04L 1/1887; H04L 1/188;
H04L 69/28**

(86) International application number:
**PCT/CN2021/081228**

(87) International publication number:
**WO 2022/041692 (03.03.2022 Gazette 2022/09)**

(54) **METHOD FOR CONTROLLING CLIENT END GOING ONLINE, NETWORK DEVICE, AND CLIENT END**

VERFAHREN ZUR STEUERUNG DES ONLINE-ABSCHLUSSES EINES CLIENTS, NETZWERKVORRICHTUNG UND CLIENT-ENDE

PROCÉDÉ DE COMMANDE DE PASSAGE EN LIGNE D'EXTRÉMITÉ CLIENT, DISPOSITIF DE RÉSEAU ET EXTRÉMITÉ CLIENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2020 CN 202010880200**

(43) Date of publication of application:
**14.06.2023 Bulletin 2023/24**

(73) Proprietor: **Huawei Technologies Co., Ltd.
Shenzhen, Guangdong 518129 (CN)**

(72) Inventors:
• **ZHAO, Hui**
  **Shenzhen, Guangdong 518129 (CN)**
• **LI, Wei**
  **Shenzhen, Guangdong 518129 (CN)**
• **CHEN, Yunlei**
  **Shenzhen, Guangdong 518129 (CN)**
• **HU, Xueming**
  **Shenzhen, Guangdong 518129 (CN)**
• **CAI, Yu**
  **Shenzhen, Guangdong 518129 (CN)**

(74) Representative: **Gill Jennings & Every LLP
The Broadgate Tower
20 Primrose Street
London EC2A 2ES (GB)**

(56) References cited:
EP-A2- 1 594 246       CN-A- 103 701 942
CN-B- 101 447 857     CN-B- 104 025 490
US-A1- 2010 189 052   US-A1- 2011 164 587
US-A1- 2014 269 629

• **"8 Radio Resource Control RRC", 16 April 2019 (2019-04-16), XP051698391, Retrieved from the Internet <URL:http://www.3gpp.org/ftp/ 3guInternal/3GPP%5Fultimate%5Fversions% 5Fto%5Fbe%5Ftransposed/sentToDpc/34123% 2D1%2Df20%2Ezip> [retrieved on 20190416]**
• **ERICSSON: "Timer for RRC Setup Request procedure (T300)", vol. RAN WG2, no. Spokane, Washington, USA; 20181112 - 20181116, 12 November 2018 (2018-11-12), XP051557941, Retrieved from the Internet <URL:http:// www.3gpp.org/ftp/Meetings%5F3GPP%5FSYNC/ RAN2/Docs/R2%2D1818453%2Ezip> [retrieved on 20181112]**

- **C. POPOVICIU R. DROMS E. LEVY-ABEGNOLI CISCO SYSTEMS: "DHCPv6 Delegation of Certificates Option; draft-popoviciu-dhc-certificate-opt-00.txt", DHCPV6 DELEGATION OF CERTIFICATES OPTION; DRAFT-POPOVICIU-DHC-CERTIFICATE-OPT-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 00, 11 November 2007 (2007-11-11), Internet Society (ISOC) 4, rue des Falaises CH- 1205 Geneva, Switzerland , XP015054484**

**Description**

**TECHNICAL FIELD**

This application relates to the communications field, and in particular, to a method for controlling a client to go online, a network device, and a client.

**BACKGROUND**

An online process usually involves interaction between a client and a server. Specifically, the client generates and sends an online request packet, to request a parameter required for accessing a network. The server responds to the online request packet and returns a reply packet. The client accesses the network based on the parameter carried in the reply packet. In addition, in a scenario in which a relay is deployed, the relay forwards the online request packet or the reply packet between the client and the server, to ensure normal interaction between the client and the server.

In the online process, retransmission of the online request packet is an important step. Specifically, after the client sends the online request packet, there is a probability that the online request packet is processed in a delayed manner or is discarded by the server or the relay. As a result, the server or the relay does not return the reply packet for the online request packet. In the current online process, when the client does not receive the reply packet, the client determines pre-configured fixed duration; or the client performs exponential attenuation on initial duration to determine duration. After determining specified duration, the client resends the online request packet at an interval of the duration until the client receives the reply packet returned from the server or the relay. However, currently, retransmission of an online request packet is independently implemented depending on a client, and a network side (for example, a server or a relay) does not intervene in a retransmission mechanism. It can be learned that the current method has a limitation.

CN 103 701 942 A provides a method, a client, a server and a system for preventing the client from frequently initiating an IP (Internet protocol) address allocation request.

CN 104 025 490 B relates to a kind of method of resource request, DHCPv6 servers and resource allocation system. US 2011/164587 A1 describes a method of requesting a radio resource in a wireless communication system.

**SUMMARY**

Embodiments of this application provide a method for controlling a client to go online, a network device, and a client, to enhance intervention of a network side in a retransmission mechanism, and resolve a limitation of a current method to some extent. The object of the invention is solved by the features of the independent claims. Further embodiments are the subject-matter of the dependent claims.

The foregoing provides a method for supporting the network side in controlling the client to retransmit the online request packet. The network device determines the sending interval of the online request packet for the client, and transmits the sending interval to the client by using the advertisement packet, so that the client retransmits the online request packet based on the interval specified by the network side. Compared with a mechanism in which the client determines the sending interval to retransmit the online request packet, the network side changes from passively responding to an online request sending behavior of the client to actively controlling the online request sending behavior of the client. Therefore, this technical solution significantly enhances intervention of the network side in the retransmission mechanism, solves a limitation of a current client online method to some extent, helps avoid problems such as an avalanche effect triggered by uncontrolled retransmission performed by the client based on a sending interval determined by the client, and helps improve efficiency and robustness of an entire system.

Because the network device considers a level of a client when specifying a retransmission interval, and specifies first duration of different sizes for clients of different levels, a system resource for processing the online request packet is preferentially allocated to a higher-level user, improving user experience of the higher-level user.

Because the network device considers, when specifying the retransmission interval, whether the client goes online for the first time, a longer sending interval is specified for a client that does not go online for the first time, to suppress a behavior of retransmitting an online request by the client that does not go online for the first time, and avoid a case in which load of a system is increased and an avalanche effect is triggered because the client that does not go online for the first time frequently retransmits the online request.

Because the network device considers the processing capability of the network device when specifying the retransmission interval, and a longer retransmission interval is specified when the processing capability of the network device is weak, this avoids a problem that a retransmitted online request still cannot be processed due to an insufficient processing capability of the network device, to avoid problems such as triggering an avalanche effect, wasting processing overheads of the client, and wasting network overheads for transmitting the online request that are caused because the client needs to retransmit the online request again. In addition, a shorter retransmission interval is specified when the processing capability of the network device is strong. This avoids an idle processing resource of the network device, helps process an online request of a user in a more timely manner, and helps the user go online more quickly.

Because the network device considers the CPU utilization when specifying the retransmission interval, a longer retransmission interval is specified when the CPU utilization is high, to avoid that the online request cannot be processed due to insufficient computing power of the CPU; in addition, a shorter retransmission interval is specified when the CPU utilization is low, to avoid idle computing power of the CPU.

Because the network device considers the quantity of buffered packets when specifying the retransmission interval, a longer retransmission interval is specified when the quantity of buffered packets is large, to avoid an avalanche effect triggered when a large quantity of backlogged packets are not processed on the network side and the client continues to retransmit the online request.

Because the network device increases the retransmission duration when the network device is overloaded, the retransmission duration increases when the network device is heavily loaded. This helps adaptively adjusted the retransmission duration with a load status of the network side, to improve flexibility.

Because the network device decreases the retransmission duration when the network device is non-overloaded, the retransmission duration decreases when the network device is lightly loaded. This helps adaptively adjusted the retransmission duration with a load status of the network side, to improve flexibility.

In the foregoing manner, if the client does not retransmit the online request packet based on the interval specified by the server, when the online request packet is transmitted to the network side, because survival duration of the entry in the blocklist is the same as the duration carried in the advertisement packet, the entry corresponding to the client in the blocklist is still in a survival state, so that the online request packet hits the blocklist and is discarded by the network side. Therefore, the online request packet is suppressed, and an impact of frequently retransmitting the online request by the client on the system is avoided, to help ensure a processing capability of the system.

In the foregoing manner, because the online request packet is discarded after hitting the blocklist, CPU overheads caused by processing the online request packet and storage space occupied by buffering the online request packet are reduced, to reduce an impact of the online request packet on the network side, and help ensure a processing capability of the network side.

In the foregoing manner, because the online request packet is discarded after hitting the blocklist, CPU overheads caused by processing the online request packet and storage space occupied by buffering the online request packet are reduced, to reduce an impact of the online request packet on the network side, and help ensure a processing capability of the network side.

## BRIEF DESCRIPTION OF DRAWINGS

FIG. 1 is a schematic diagram of a DHCP networking architecture according to an embodiment of this application;
FIG. 2 is a schematic diagram of a DHCP networking architecture according to an embodiment of this application;
FIG. 3 is a flowchart of an online process of a DHCP client according to an embodiment of this application;
FIG. 4 is a schematic diagram of an online scenario of a DHCP client according to an embodiment of this application;
FIG. 5 is a schematic diagram of a logical function architecture of a DHCP server or a DHCP relay according to an embodiment of this application;
FIG. 6 is a schematic diagram of a format of an advertisement packet in a DHCPv4 scenario according to an embodiment of this application;
FIG. 7 is a schematic diagram of a format of an advertisement packet in a DHCPv6 scenario according to an embodiment of this application;
FIG. 8 is a flowchart of a method for controlling a client to go online according to an embodiment of this application;
FIG. 9 is a flowchart of a method for controlling a client to go online according to an embodiment of this application;
FIG. 10 is a flowchart of a method for controlling a client to go online according to an embodiment of this application;
FIG. 11 is a schematic diagram of a structure of a network device according to an embodiment of this application;
FIG. 12 is a schematic diagram of a structure of a client according to an embodiment of this application;
FIG. 13 is a schematic diagram of a structure of a network device according to an embodiment of this application;
FIG. 14 is a schematic diagram of a structure of a client according to an embodiment of this application; and
FIG. 15 is a schematic diagram of a structure of a network system according to an embodiment of this application.

## DESCRIPTION OF EMBODIMENTS

To make the objectives, technical solutions, and advantages of this application clearer, the following further describes implementations of this application in detail with reference to the accompanying drawings.

Because embodiments of this application relate to application of a dynamic host configuration protocol (dynamic host configuration protocol, DHCP), for ease of understanding, the following describes term-related concepts and networking scenarios in the DHCP.

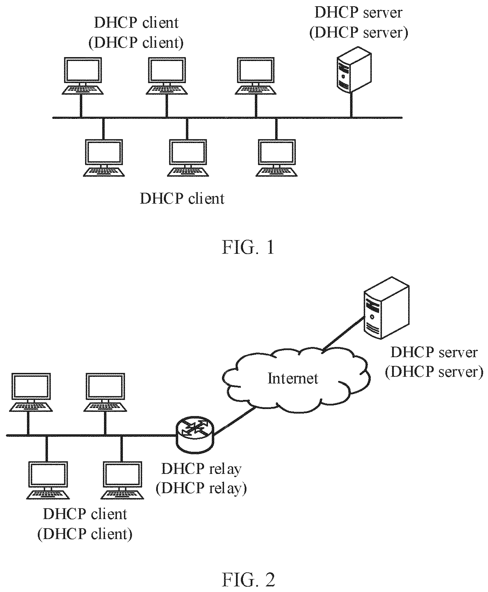

The DHCP is a protocol that assigns a parameter to a host. The DHCP uses an architecture of a client/server (client/server, C/S). A client uses the DHCP to request a network parameter from a server. The server responds to the request and allocates a network address and another parameter to the client. The client in the DHCP is also referred to as a dynamic host configuration protocol client (dynamic host configuration protocol client, DHCP client, namely, DHCP client). The server in the DHCP is also referred to as a dynamic host configuration protocol server (dynamic host configuration protocol server, DHCP server, namely, DHCP server). For example, refer to FIG. 1. FIG. 1 is an example of a networking architecture of a DHCP client+a DHCP server. In a networking scenario shown in FIG. 1, the DHCP client directly requests a service from the DHCP server. In addition, optionally, an architecture of a DHCP further includes a dynamic host configuration protocol relay (dynamic host configuration protocol Relay, DHCP relay, namely, DHCP relay). For another example, refer to FIG. 2. FIG. 2 is an example of a networking architecture of a DHCP client+a DHCP server+a DHCP relay. In a networking scenario shown in FIG. 2, the DHCP client requests a service from the DHCP server through the DHCP relay.

The DHCP includes two scenarios. One scenario is dynamic host configuration protocol for internet protocol version 4 (internet protocol version 4, IPv4) (dynamic host configuration protocol for IPv4, DHCPv4), and the other scenario is dynamic host configuration protocol for internet protocol version 6 (internet protocol version 6, IPv6) (dynamic host configuration protocol for IPv6, DHCPv6).

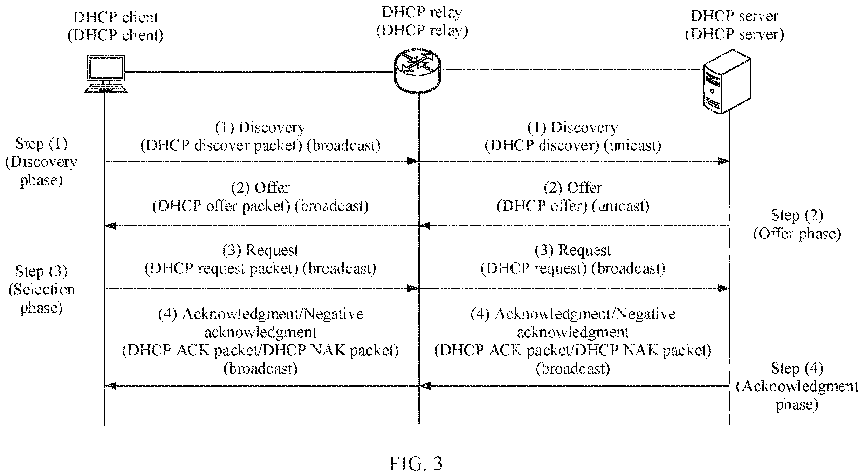

The DHCP client usually implements an online process through four-step interaction. Referring to FIG. 3, the four-step interaction includes four steps corresponding to four phases: a discovery phase, an offer phase, a selection phase, and an acknowledgment phase.

Step (1) in the four-step interaction is the discovery phase. In the DHCPv4 scenario, the DHCP client actively sends a DHCP discover (DHCP discover) packet in Step (1). The DHCP discover packet is the $1^{st}$ packet sent by the DHCP client in a DHCP interaction process when the DHCP client accesses a network for the first time, and is used to search for the DHCP server. In the DHCPv6 scenario, the DHCP client actively sends a DHCP solicit (DHCP solicit, used to locate the server) packet in Step (1). The DHCP solicit packet is used to locate the DHCPv6 server that can provide a service for the DHCP client. Take the DHCPv4 scenario as an example. In the discovery phase, the DHCP client that accesses the network for the first time sends, through broadcast, the DHCP discover packet (in which a destination IP address is 255.255.255.255) to all devices (including the DHCP server or the relay) on a same network segment, so that the DHCP client can learn the IP address of the DHCP server. In addition, in a scenario in which the DHCP relay is deployed, after receiving the DHCP discover packet sent, through broadcast, by the DHCP client, the DHCP relay sends, through unicast, the DHCP discover packet to the DHCP server or a next-hop relay through route forwarding.

Step (2) in the four-step interaction is the offer phase. In the DHCPv4 scenario, the DHCP server responds with a DHCP offer (DHCP offer) packet in Step (2). In the DHCPv6 scenario, the DHCP server responds with a DHCP advertise (DHCP advertise) packet in Step (2). Take the DHCPv4 scenario as an example. In the offer phase, all DHCP servers on the same network segment as the DHCP client receive the DHCP discover packet. The DHCP server selects an address pool on the same network segment as an IP address of an interface that receives the DHCP discover packet, selects an available IP address from the address pool, and sends the IP address to the DHCP client by using the DHCP offer packet. In addition, in a scenario in which the DHCP relay is deployed, the DHCP relay sends, through unicast, the DHCP offer packet to the DHCP client after receiving the DHCP discover packet.

Step (3) in the four-step interaction is the selection phase. In the DHCPv4 or DHCPv6 scenario, the DHCP client sends a DHCP request (DHCP request) packet in Step (3).

Step (4) in the four-step interaction is the acknowledgment phase. In the DHCPv4 scenario, the DHCP server responds with a DHCP acknowledgment (DHCP acknowledgment, DHCP ACK) packet or a DHCP negative acknowledgment (DHCP negative acknowledgment, DHCP NAK) packet in Step (4). In the DHCPv6 scenario, the DHCP server responds with a DHCP reply (DHCP reply) packet in Step (4).

The following describes a system architecture provided in embodiments of this application.

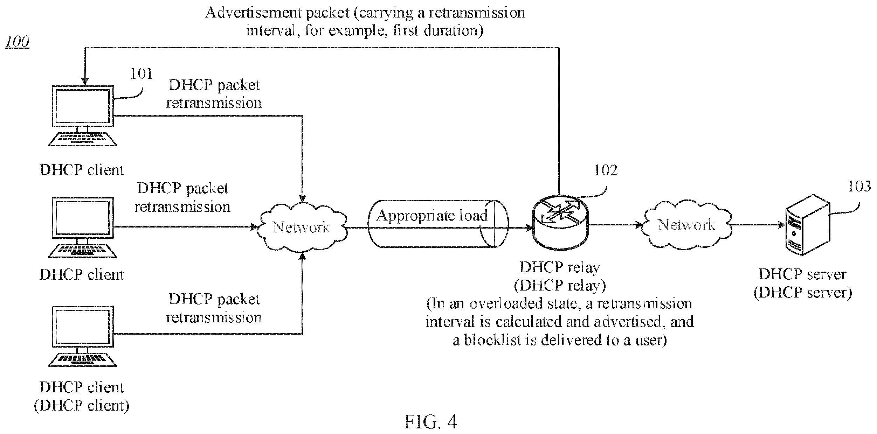

Refer to FIG. 4. An embodiment of this application provides a system architecture 100. The system architecture 100 is an example of a networking architecture of a DHCP. The system architecture 100 includes a plurality of DHCP clients 101, a DHCP relay 102, and a DHCP server 103.

The plurality of DHCP clients 101 are separately connected to the DHCP relay 102 by using a network. The DHCP relay 102 is connected to the DHCP server 103 by using the network.

The DHCP relay 102 and the DHCP server 103 are control nodes in the system architecture 100. The DHCP client 101 is configured to send a DHCP request packet (for example, an online request packet). The DHCP relay 102 is configured to forward a DHCP packet between the DHCP server 103 and the DHCP client 101. The DHCP server 103 is configured to select an IP address from an address pool and allocate the IP address to the DHCP client 101, and may further provide another network parameter for the DHCP client 101.

The following describes an application scenario of this embodiment with reference to the system architecture 100.

In a scenario shown in the system architecture 100, the DHCP client accesses the DHCP server through the DHCP relay to go online. Alternatively, the DHCP client directly connects to the DHCP server to go online without passing through the DHCP relay. Each DHCP client usually performs the four-step interaction process shown in FIG. 3 when going online. The process starts when the DHCP client actively sends a DHCP discover packet or a DHCP solicit packet and ends when the DHCP client receives a DHCP ACK packet, a DHCP NAK packet, or a DHCP reply packet.

A retransmission mechanism is an important technology in a DHCP online process. Specifically, in the DHCP online process, interaction of two pairs of protocol packets in the four-step interaction needs to be completed within a specified time period, and delay processing or discarding of any packet causes a current online failure. However, due to an impact of network bandwidth, link status, and a processing capability of the DHCP server or the DHCP relay, it is difficult for the DHCP client to go online through one dial-up (for example, one four-step interaction). According to a protocol, if the DHCP client does not receive a reply packet in time after sending the request packet, the retransmission mechanism is triggered. Specifically, the DHCP client restarts the online process, and retransmits the packet starting from the 1st packet exchanged in the protocol. Currently, the DHCP client retransmits the packet at a fixed interval or at an interval obtained after exponential attenuation.

In addition, a scenario in which a large number of users go online concurrently is a typical scenario in the DHCP online process. Specifically, a system usually has a plurality of DHCP clients, and the plurality of DHCP clients usually have time convergence when going online. For example, an enterprise private line user usually goes online during working hours, and a home bandwidth user usually goes online during weekends. When a large number of users go online concurrently, a large number of DHCP packets are generated instantly.

In the scenario described above, how to avoid an avalanche effect is an urgent problem to be resolved. Specifically, when the large number of DHCP packets arrive at the DHCP relay or the DHCP server by using the network, if an instantaneous processing capability of the DHCP relay or the DHCP server is exceeded, the packet is processed in a delayed manner or is discarded by the DHCP relay or the DHCP server. For the DHCP client, packet interaction cannot be completed in time because the packet is delayed or discarded. In this case, the DHCP client attempts to perform retransmission. After the retransmitted packet is transmitted to the system, load of the system (for example, the DHCP server and DHCP relay) is further increased. Specifically, if the system adopts a policy in which the system buffers all packets, the retransmitted online request packet increases storage overheads of the system and overheads of a central processing unit (central processing unit, CPU) for storing this part of packets. In addition, the processing capability of the system is fixed, and an increase of a quantity of processed packets necessarily prolongs average packet processing time. The client has a requirement that the packet arrives in time. Therefore, a situation may occur in which packet processing cannot satisfy the requirement of the client and the client may still be triggered to retransmit the packet. If the system adopts a policy in which the system discards a packet that exceeds the processing capability and the discarding action is performed by a CPU layer, the overheads corresponding to the system are still occupied. If the discarding action is performed by a lower layer, the packet is generally discarded based on a port layer instead of a device level. As a result, a quantity of protocol packets keeps increasing. The quantity of retransmitted packets keeps increasing. This increases load of the system. In addition, the system cannot process a renewal behavior of an online user in time. As a result, more users join the online process, and a quantity of packets sent on an entire network increases greatly, causing an avalanche effect of the system.

Through analysis, it is found that the avalanche effect is caused because the retransmission mechanism is independently implemented depending on the client. The DHCP relay or DHCP server, however, does not actively intervene in the DHCP client. The DHCP relay or DHCP server can only passively respond to and process a packet. In this mode, the client may continuously retransmit the packet due to insufficient processing capability of the device (the server or relay), which further increases load of the system. Particularly, a system usually has a large quantity of DHCP clients, and each DHCP client goes online independently as an individual. A large quantity of repeated individual behaviors cause the entire system to exceed a load capability. As a result, a bottleneck occurs on a packet convergence node (a DHCP relay or DHCP server), triggering an avalanche effect and causing a system fault. Particularly, if a retransmission period of some clients is set to a short value, or different clients have different online quality requirements, uncontrolled retransmission of the clients has a more prominent impact on the clients to go online.

However, in some embodiments of this application, a network side (the DHCP relay or DHCP server) of the system calculates an appropriate retransmission interval based on a processing capability of the system and with reference to a level and online information of the DHCP client, and sends the retransmission interval to the DHCP client by using an advertisement packet, so that the network side changes from passive processing to active control on an online request packet sending behavior of the DHCP client. Because the online request packet sending behavior of the client is controlled and scheduled by the network side, efficiency of the entire system is improved, and an avalanche effect is avoided. In this way, a probability of a system fault is reduced, and robustness and reliability of the system are enhanced.

The foregoing system architecture 100 focuses on describing an overall network architecture. The following describes a logical function architecture of the DHCP server or the DHCP relay in the system architecture 100.

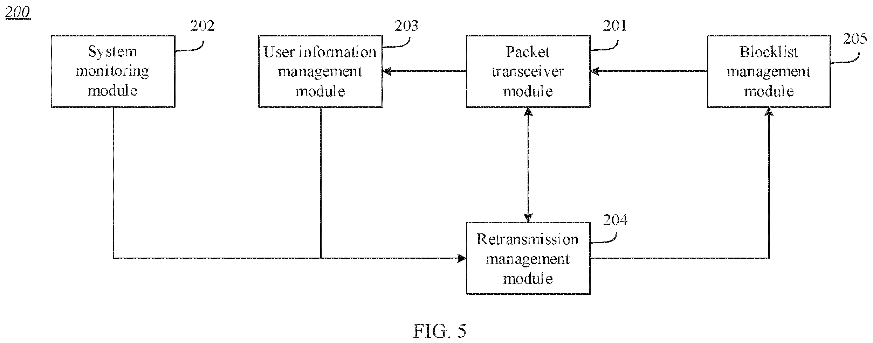

Refer to FIG. 5. An embodiment provides another system architecture 200. The system architecture 200 is an example of a logical function architecture of the DHCP server or the DHCP relay in the system architecture 100.

Functional modules included in the system architecture 200 are examples of functional modules in the DHCP server or the DHCP relay. Specifically, the system architecture 200 includes a packet transceiver module 201, a system monitoring module 202, a user information management module 203, a retransmission management module 204, and a blocklist management module 205.

The packet transceiver module 201 is configured to receive a protocol packet (for example, an online request packet), generate user information, collect statistics on a packet processing status (for example, a quantity of buffered packets), and provide the packet processing status to the retransmission management module 204. In addition, the packet transceiver module 201 receives a retransmission interval (for example, first duration) and client information calculated by the retransmission management module 204, and constructs and sends a packet (for example, an advertisement packet).

The system monitoring module 202 is configured to monitor a status (such as CPU utilization) of a system CPU, and provide the status of the CPU to the retransmission management module 204.

The user information management module 203 is configured to generate online information based on a protocol packet interaction process, where the online information includes information such as a MAC address of a client and whether the client goes online for the first time.

The retransmission management module 204 is configured to calculate the retransmission interval based on the information provided by the system monitoring module 202 and the user information management module 203 respectively, and notify the retransmission interval to the packet transceiver module 201 and the blocklist management module 205.

The blocklist management module 205 is configured to deliver a blocklist, so that the packet transceiver module 201 uses the blocklist. In addition, the blocklist management module 205 is configured to perform aging processing on the blocklist based on survival duration.

The following describes a packet format provided in this embodiment.

This embodiment provides the advertisement packet, where the advertisement packet is used to advertise the retransmission interval (namely, a sending interval of the online request packet). For example, if a network side determines that it is appropriate for the client to send the online request packet at an interval of the first duration, the network side adds the first duration to the advertisement packet, and transfers the advertisement packet including the first duration to the client. The advertisement packet can indicate the client to adjust the sending interval of the online request packet to the first duration, to control an implementation in which the client retransmits the online request packet.

In some embodiments, the advertisement packet is a DHCP packet. In some embodiments, the advertisement packet is referred to as a DHCP RETRANS packet (a DHCP retransmission time packet), and the DHCP RETRANS packet indicates the client to implement retransmission. The DHCP packet used as the advertisement packet includes a retransmission option (retransmission option, also referred to as a ReTranstime option). The retransmission option includes the interval (for example, first duration in the following embodiment) for sending the online request packet. The retransmission option uses a TLV encoding mode, and the retransmission option includes a type (type) field, a length (length) field, and a value (value) field. The type field includes an option number of the retransmission option, and the option number is used to identify that the retransmission option carries the sending interval of the online request packet. The length field includes a length of the value field in the retransmission option. The value field includes the interval (for example, the first duration in the following embodiment) for sending the online request packet.

In some embodiments, the DHCP packet used as the advertisement packet further includes a DHCP message type field, and the DHCP message type field is used to identify that the DHCP packet is an advertisement packet that carries the sending interval of the online request packet. In some embodiments, the DHCP packet used as the advertisement packet is a DHCP reply packet.

A new type of DHCP protocol packet is added as the advertisement packet, and the newly added type of DHCP protocol packet indicates the sending interval of the online request packet, so that the DHCP server or the DHCP relay uses the newly added type of DHCP protocol packet to control, during retransmission, an interval at which the DHCP client sends the online request packet. This manner of extending the DHCP protocol packet can reuse a networking architecture of a DHCP, and is compatible with an existing communication process of the DHCP, to reduce implementation complexity.

This embodiment includes a DHCPv4 scenario and a DHCPv6 scenario. A specific format of the advertisement packet varies in different scenarios. The following separately describes the format of the advertisement packet by using Scenario 1 and Scenario 2 as examples.

Scenario 1: Format of the advertisement packet in the DHCPv4 scenario

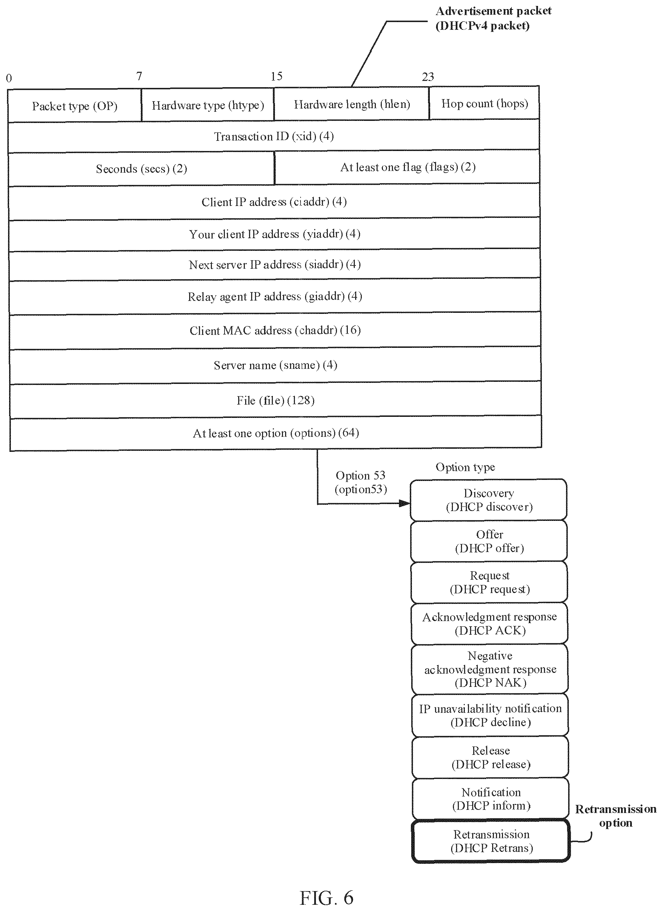

In the DHCPv4 scenario, the advertisement packet is a DHCPv4 packet. For example, the advertisement packet is a newly added DHCPv4 reply packet. For example, the advertisement packet is used to respond to a DHCP discover packet. For example, refer to FIG. 6. FIG. 6 shows an example of the format of the advertisement packet in the DHCPv4 scenario.

In FIG. 6, a number in parentheses of each field indicates a length of the field, and a unit of the length of the field is byte. For example, a hardware type (hardware type, htype) field is marked with "(1)", indicating that a length of the htype field is 1 byte. Specifically, a meaning of each field in FIG. 6 is shown as follows:

A packet type (OP, op code) field indicates a type of a packet. A length of the OP field is 1 byte. A value of the OP field is 1 or 2.

When the value of the OP field is 1, the DHCP packet is a client request packet. When the value of the OP field is 2, the DHCP packet is a server reply packet. In this embodiment, the value of the OP field in the advertisement packet is, for example, 2.

A htype field indicates a hardware type. A length of the htype field is 1 byte. A value of the htype field varies with different hardware types. In this embodiment, the value of the htype field in the advertisement packet is, for example, 1, indicating that the hardware type is an Ethernet (Ethernet).

A hardware length (hardware length, hlen) field indicates a length of a hardware address. A length of the hlen field is 1 byte. For an Ethernet, a value of the hlen field is 6. In this embodiment, the value of the hlen field in the advertisement packet is, for example, 6.

A hops field indicates a quantity of DHCP relays through which the current DHCP packet passes. In this embodiment, a length of the hops field in the advertisement packet is 1 byte. A value of the hops field is set to 0 by the client or server. The value of the hops field is increased by 1 each time the packet passes through one DHCP relay. The hops field is used to limit a quantity of DHCP relays that the DHCP packet passes through. A maximum of 16 DHCP relays are allowed between the server and the client. In other words, a value of the hops field cannot exceed 16. Otherwise, the DHCP packet is discarded. In this embodiment, the value of the hops field in the advertisement packet is, for example, 0.

A transaction ID (transaction ID, xid) field indicates a random number selected by the DHCP client, so that a reply of the DHCP server is associated with a packet of the DHCP client. A length of the xid field is 4 bytes. In this embodiment, a value of the xid field in the advertisement packet is, for example, 0xb7722fdb, where 0xb7722fdb is a random number.

A second (second, secs) field indicates duration taken by the client to obtain an address or renew address lease. A unit of the time is second. A length of the secs field is 2 bytes. In this embodiment, a value of the secs field in the advertisement packet is, for example, 0.

At least one flags (flags) field: A length of the flags field is 2 bytes. For example, the highest order bit of the flags field is meaningful, and the highest order bit of the flags field may be referred to as a unicast response flag or a broadcast response flag (broadcast flag).

Remaining 15 bits other than the highest order bit in the flags field are, for example, reserved flags fields (reserved flags), and the remaining 15 bits other than the highest order bit in the flags field are set to 0. For example, if the highest order bit in the flags field is 0, it indicates that the client requests the server to send the reply packet in a unicast mode. If the highest order bit in the flags field is 1, it indicates that the client requests the server to send the response packet in a broadcast mode. For example, a value of the flags field in the advertisement packet is 0x0000. 0x0000 consists of two parts. The 1st part is the highest order bit. A value is 0, indicating unicast (unicast). The 2nd part is the remaining 15 bits other than the highest order bit. A value is 000 0000 0000 0000, which can be simplified as 0x0000.

A client IP address (client IP address, ciaddr) field indicates an internet protocol (internet protocol, IP) address of the client. A length of the ciaddr field is 4 bytes. For example, the ciaddr field carries an IP address allocated by the server to the client or an existing IP address of the client. For example, a value of the ciaddr field in the advertisement packet is 0.0.0.0. 0.0.0.0 is a temporary IP address. Because the client does not have an IP address in an initialization state, a host is allowed to use the IP address 0.0.0.0 for temporary communication when a system is started in a DHCP mode. 0.0.0.0 is not a valid destination address.

A your client IP address (Your (client) IP address, yiaddr) field indicates an IP address allocated by the server to the client. When the server responds to a DHCP, the IP address allocated to the client is filled in this field. For example, a value of the yiaddr field in the advertisement packet is 0.0.0.0. For example, a length of the yiaddr field is 4 bytes.

A next server IP address (next server IP address, siaddr) field indicates an IP address of the server from which the DHCP client obtains startup configuration information. For example, a value of the siaddr field in the advertisement packet is 0.0.0.0. For example, a length of the siaddr field is 4 bytes.

A relay agent IP address (relay agent IP address, giaddr) field indicates an IP address of the 1st DHCP relay. When the client sends a DHCP request, if the server and the client are on different network segments, the 1st DHCP relay forwards a DHCP request packet to the DHCP server and fills the IP address of the 1st DHCP relay in the giaddr field. The DHCP server determines an address of a network segment of the client based on the giaddr field, selects an appropriate address pool, and assigns the IP address of the network segment to the client. The server also sends a response packet to the DHCP relay based on the address, and the DHCP relay forwards the packet to the client. For example, a value of the giaddr field in the advertisement packet is 10.147.160.20. For example, a length of the giaddr field is 4 bytes.

A client hardware address (client hardware address, chaddr) field indicates a media access control (media access control, MAC) address of the client. For example, a length of the chaddr field is 16 bytes. The chaddr field is the same as the htype and hlen fields. When sending a DHCP request, the client fills a hardware address of the client in the chaddr field. For an Ethernet, when the hardware type field and the hardware length field are "1" and "6" respectively, the chaddr field is filled with a 6-byte Ethernet MAC address. For example, if the Ethernet MAC address is RealtekS_86:2e:ca, a value of the chaddr field in the advertisement packet is 00:e0:4c:86:2e:ca. 00:e0:4c:86:2e:ca includes a 6-byte MAC address and a 10-byte padding field (client hardware address padding), where a value of the padding field is, for example, 00000000000000000000.

A server host name (server host name, sname) field indicates a name of the server from which the client obtains configuration information. The sname field is, for example, 64 bytes.

A file name (file (file name)) indicates a name of a startup configuration file to be obtained by the client. For example, the file name field is 128 bytes. For example, a value of the file name field is pxebdd.0. pxebdd.0 is a character string ending with 0.

A length of at least one options (options) field is variable. The options field includes an option53 field, a retransmission option, and an end option. The option53 field is used to set a DHCP message type (DHCP message type). An option number of the option53 field is 53. For example, a value of a length field of the option53 field is 1. A value field of the option53 field includes the DHCP message type.

In this embodiment, the option53 field in the advertisement packet includes a newly added message type value, the newly added message type value is used to identify that the DHCP packet is an advertisement packet, and the newly added message type value is different from message types of eight types of packets currently defined in the DHCPv4. For example, the option53 field in the advertisement packet includes 9, where 9 is an example of a newly added DHCPv4 message type value. When receiving the DHCP packet, the client checks the DHCP message type in the option53 field. If it is found that a value of the DHCP message type is 9, the client determines that the DHCP packet is an advertisement packet carrying a sending interval.

A retransmission option is, for example, referred to as a DHCP retransmission time (DHCP Retrans time) option. The DHCP Retrans time option is a newly added option in a DHCPv4 packet. For example, the retransmission option is an option 222. The retransmission option includes an option type field, an option length field, and a DHCP retransmission time value (DHCP Retrans time value) field. The option type field includes an option type of the retransmission option (an option number of the retransmission option). For example, when the retransmission option is the option 222, the option type field includes 222. The option length field includes a length of the retransmission option. For example, a value of the option length field is 4. The DHCP retransmission time value field is a newly added field in the DHCPv4 packet. The DHCP retransmission time value field includes a specific value of the sending interval (for example, the first duration in the following embodiment).

For example, the end option is an option 255 (option 255), and an option number of the option 255 is 255. The end option indicates that the option field has ended.

Scenario 2: Format of the advertisement packet in the DHCPv6 scenario

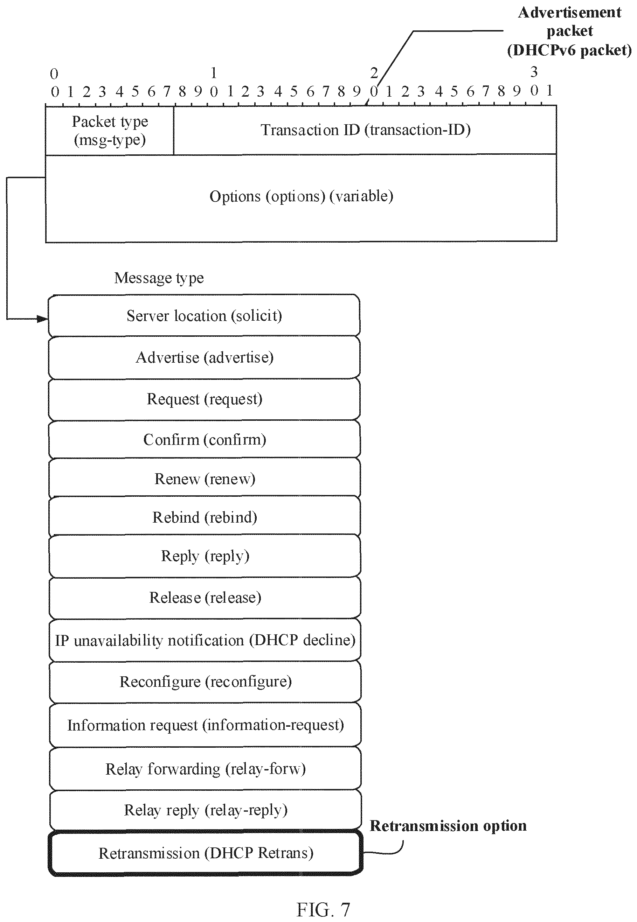

In the DHCPv6 scenario, the advertisement packet is a DHCPv6 packet. For example, the advertisement packet is a newly added DHCPv6 reply packet. For example, the advertisement packet is used to respond to a DHCP solicit packet. For example, refer to FIG. 7. FIG. 7 shows an example of the format of the advertisement packet in the DHCPv6 scenario.

A message type (message type, msg-type) field indicates a type of a packet. In this embodiment, the msg-type field in the advertisement packet includes a newly added message type value, the newly added message type value is used to identify that the DHCP packet is an advertisement packet, and the newly added message type value is different from message types of thirteen types of packets currently defined in the DHCPv6. For example, a value of the msg-type field in the advertisement packet is 14, where 14 is an example of a newly added DHCPv6 message type value.

A transaction ID (transaction ID) field indicates a DHCPv6 interaction ID (also referred to as a transaction ID), and is used to identify round-trip DHCPv6 packet interaction. For example, a solicit/advertise packet is interaction. A request/reply packet is other interaction. The solicit/advertise packet and the request/reply packet have different transaction IDs. A length of the transaction ID field is, for example, 3 bytes. In this embodiment, a value of the transaction ID field in the advertisement packet is, for example, 0xaa075c, where 0xaa075c is a random number.

In addition, the DHCPv6 packet used as an advertisement packet in the DHCPv6 scenario includes a client ID (client identifier) option. For example, the client ID option specifically includes the following several fields.

The client ID option includes an option type (option type) field. The option type field is used to identify that a type of an option is the client ID option. For example, a value of the option type field in the client ID option is 1.

The client ID option includes an option length (option length) field. For example, a value of the option length field in the client ID option is 10.

The client ID option includes a value (value) field. For example, a value of the value field in the client ID option is 00010203040506070809.

The client ID option includes a DHCP unique identifier (DHCP unique identifier, DUID) field. The DUID field carries a DUID. The DUID is an only identifier of a DHCPv6 device (including a client, a server, and a relay). During DHCPv6 packet interaction, the DHCPv6 client, server, and relay identify the DHCPv6 client, server, and relay by adding the DUID to the packet. For example, a value of the DUID field in the advertisement packet is 00010203040506070809.

The client ID option includes a DUID type (DUID type) field. The DUID type field indicates a DUID type. For example, a value of the DUID type field in the advertisement packet is 1, where 1 indicates that the DUID type is a DUID based on link-layer address (DUID based on link-layer address, DUID-LL).

The client ID option includes a hardware type (hardware type) field. The hardware type field indicates a hardware type. For example, the hardware type field includes 6, where 6 indicates that the hardware type is IEEE 802.

The client ID option includes a time (time) field. For example, the time field includes 317290726.

The client ID option includes a link-layer address (link layer address) field. The link-layer address field indicates a bridge MAC address of a device. For example, the link-layer address field includes 00:e0:4C:77:4e:5a.

In addition, the DHCPv6 packet used as an advertisement packet in the DHCPv6 scenario includes an ID association (identity association, IA) option. Each DHCPv6 client is associated with an IA, and each IA can include a plurality of addresses and related time information. Corresponding IAs are generated based on different address types. For example, the advertisement packet includes an IA_NA (identity association for non-temporary address, in which an address included in the IA is a non-temporary address) option. For example, a value of an option type field of the IA_NA option is 3. For example, a value of an option length field of the IA_NA option is 12. For example, a value of a value field of the IA_NA option is 1a00acf30000000000000000. The value field of the IA_NA option specifically includes an IAID field, a T1 field, and a T2 field. For example, a value of the IAID field is 1a00acff. For example, a value of the T1 field is 0. For example, a value of the T2 field is 0.

For example, a retransmission option is referred to as a Retrans time option. The Retrans time option is a newly added option in the DHCPv6 packet. For example, the retransmission option is an option 39. The retransmission option includes an option type field, an option length field, and a DHCP retransmission time value (DHCP Retrans time value) field. The option type field includes an option type of the retransmission option (an option number of the retransmission option). For example, when the retransmission option is the option 39, the option type field includes 39. The option length field includes a length of the retransmission option. For example, a value of the option length field is 4. The DHCP retransmission time value field includes a specific value of a sending interval (for example, the first duration in the following embodiment). The DHCP retransmission time value field is a newly added field in the DHCPv6 packet.

The foregoing describes the networking architecture, the logical function architecture, and the packet format in this embodiment. The following describes, by using a method 300 to a method 500, an example of a process of a method for controlling a client to go online based on the foregoing descriptions.

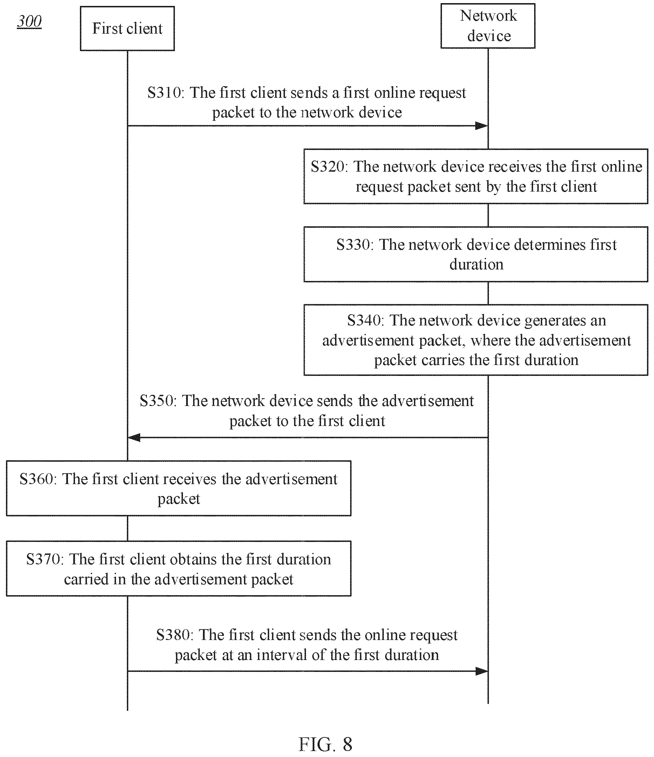

Refer to FIG. 8. FIG. 8 is a flowchart of a method 300 for controlling a client to go online according to an embodiment of this application.

In some embodiments, the method 300 is interactively performed by the DHCP client 101, the DHCP relay 102, and the DHCP server 103 in the system architecture shown in FIG. 4. For example, a network device in the method 300 is the DHCP server 103 or the DHCP relay 102, and a first client or a second client is the DHCP client 101.

In some embodiments, the network device in the method 300 has the architecture 200 shown in FIG. 5. Steps that the network device in the method 300 is responsible for performing are separately performed by the modules in the architecture 200.

For advertisement packets exchanged in the method 300, refer to FIG. 6, FIG. 7, and corresponding text descriptions.

For example, the method 300 includes S310 to S380.

S310: The first client sends a first online request packet to the network device.

The first online request packet is used to request to allocate an IP address or another network parameter to the first client. The first online request packet is, for example, a DHCP packet. In a DHCPv4 scenario, the first online request packet is, for example, a DHCPv4 packet. For example, the first online request packet is a DHCP discover packet. In a DHCPv6 scenario, the first online request packet is, for example, a DHCPv6 packet. For example, the first online request packet is a DHCP solicit packet.

The first online request packet includes a source address of the first client. The source address of the first client is, for example, a source MAC address of the first client. For example, the first online request packet includes a MAC frame header, the MAC frame header includes a source MAC address field, the source MAC address field includes a MAC address, and the source address of the first client is the MAC address in the source MAC address field.

S320: The network device receives the first online request packet sent by the first client.

S330: The network device determines first duration.

The first duration is an example of a retransmission interval. The first duration is a sending interval of an online request packet that is determined by the network device for the first client. The retransmission interval refers to an interval between two time points when the client sends two consecutive online request packets. In other words, the retransmission interval is a time difference between a time point when a latter online request packet is sent and a time point when a former online request packet is sent. For example, if the client sends an online request packet at a moment M, and the client resends the online request packet at a moment N after the moment M, the retransmission interval is a time difference between the moment N and the moment M.

There are a plurality of implementations of determining the first duration. The following uses Manner 1 to Manner 3 as examples for description.

Manner 1: A network side determines the first duration based on a level of the client.

For example, the network device obtains the source address of the first client from the first online request packet, the network device determines the level of the first client based on the source address of the first client, and the network device determines the first duration based on the level of the first client.

In some embodiments, the level of the client is indicated by quality of service (quality of service, QoS) information of the client. For example, the network device obtains the QoS information of the first client by querying a user table based on the source address of the first client. The QoS information indicates the level of the first client. For example, the QoS information includes an online time point of the first client or an online congestion attribute of the first client.

In some embodiments, the network device determines a shorter retransmission interval for a higher-level client. The level of the client is, for example, indicated based on a level of a user account used by the client for login. Levels of the client include but are not limited to a very important person (very important person, VIP) user, a common user, a private-line user, a specific user, and the like. A priority of a VIP user or a private-line user is, for example, higher than a priority of a common user, and a retransmission interval determined by the network device for the VIP user or the private-line user is shorter than a retransmission interval determined for the common user. For example, if the level of the first client is a VIP user or a private-line user, the network device uses a first preset value as the first duration; or if the level of the first client is a common user, the network device uses a second preset value as the first duration, where the first preset value is less than the second preset value. For another example, if the level of the first client is a common user, the network device increases the sending interval of the online request packet by second duration, to obtain the first duration; or if the level of the first client is a VIP user or a private-line user, the network device decreases the sending interval of the online request packet by third duration, to obtain the first duration.

An effect achieved by Manner 1 includes: Because the network device considers a level of a client when specifying the retransmission interval, first duration of different values is specified for clients of different levels, and a shorter sending interval is specified for a higher-level client (for example, a client of a VIP user or a private-line user), a higher-level user can preferentially retransmit an online request, the online request of the higher-level user is preferentially received and processed by the network side, and the online request of the higher-level user is preferentially responded to. Therefore, a system resource for processing the online request packet is preferentially allocated to the higher-level user. The system resource is preferentially allocated to the higher-level user, improving user experience of the higher-level user.

Manner 2: A network side determines the first duration depending on whether the client goes online for the first time.

For example, the network device obtains the source address of the first client from the first online request packet, the network device obtains online information of the first client based on the source address of the first client, and the network device determines the first duration based on the online information of the first client.

The online information indicates whether the first client is a client that goes online for the first time. For example, the online information includes an identifier. If the first client is a client that goes online for the first time, the identifier is set to a value A. If the first client is a client that does not go online for the first time, the identifier is set to a value B. For example, the online information is information about a user that is going online. The user that is going online includes, for example, the first client. In some embodiments, the online information further includes an identity (identity, ID) of the first client, address information of the user, and the like.

In some embodiments, the network device increases retransmission duration for the client that does not go online for the first time. For example, after obtaining the online information of the first client, the network device determines, based on the online information of the first client, whether the first client is a client that goes online for the first time or a client that does not go online for the first time. If the first client is a client that goes online for the first time, the network device uses a first preset value as the first duration; or if the first client is a client that does not go online for the first time, the network device uses a second preset value as the first duration, where the first preset value is less than the second preset value. For another example, if the first client is a client that does not go online for the first time, the network device increases the sending interval of the online request packet by second duration, to obtain the first duration; or if the first client is a client that goes online for the first time, the network device decreases the sending interval of the online request packet by third duration, to obtain the first duration.

An effect achieved by Manner 2 includes: Because the network device considers, when specifying the retransmission interval, whether the client goes online for the first time, a longer sending interval is specified for a client that does not go online for the first time, to suppress a behavior of retransmitting an online request by the client that does not go online for the first time, and avoid a case in which load of a system is increased and an avalanche effect is triggered because the client that does not go online for the first time frequently retransmits the online request.

Manner 3: A network side determines the first duration based on a processing capability of the network side.

For example, the network device obtains capability data, and the network device determines the first duration based on the capability data.

The capability data indicates a packet processing capability of the network device. For example, the capability data includes at least one of CPU utilization of the network device or a quantity of packets buffered by the network device. The CPU utilization indicates a status of a CPU of the network device. Higher CPU utilization indicates a busier CPU status of the network device, and lower CPU utilization indicates an idler CPU status of the network device. The quantity of packets buffered by the network device indicates a quantity of backlogged packets that have not been currently processed by the network device. In some embodiments, a to-be-processed packet of the network device is buffered by using a buffer queue, and the quantity of packets buffered by the network device is the quantity of backlogged packets in the buffer queue of the network device. In some embodiments, the capability data further includes a ratio of a quantity of packets processed in unit time to a maximum value of a packet processing capability. A larger quantity of packets processed in the unit time indicates a stronger packet processing capability of the network device. Optionally, the quantity of packets processed in the unit time is a quantity of DHCP packets (for example, DHCP discover packets or DHCP solicit packets) processed in the unit time.

In some embodiments, a weaker packet processing capability indicated by the capability data indicates longer first duration. For example, if the packet processing capability of the network device is higher than a threshold, the network device uses a first preset value as the first duration; or if the packet processing capability of the network device is lower than or equal to a threshold, the network device uses a second preset value as the first duration, where the first preset value is less than the second preset value. For another example, if the packet processing capability of the network device is lower than or equal to a threshold, the network device increases the sending interval of the online request packet by second duration, to obtain the first duration; or if the packet processing capability of the network device is higher than a threshold, the network device decreases the sending interval of the online request packet by third duration, to obtain the first duration.

An effect achieved by Manner 3 includes: Because the network device considers the processing capability of the network device when specifying the retransmission interval, and a longer retransmission interval is specified when the processing capability of the network device is weak, this avoids a problem that a retransmitted online request still cannot be processed due to an insufficient processing capability of the network device, to avoid problems such as triggering an avalanche effect, wasting processing overheads of the client, and wasting network overheads for transmitting the online request that are caused because the client needs to retransmit the online request again. In addition, a shorter retransmission interval is specified when the processing capability of the network device is strong. This avoids an idle processing resource of the network device, helps process an online request of a user in a more timely manner, and helps the user go online more quickly.

In some embodiments, Manner 3 specifically includes at least one of Manner (3-A) or Manner (3-B).

Manner (3-A): The network device determines the first duration based on the CPU utilization. Higher CPU utilization indicates longer first duration.

Because the network device considers the CPU utilization when specifying the retransmission interval, a longer retransmission interval is specified when the CPU utilization is high, to avoid that the online request cannot be processed due to insufficient computing power of the CPU; in addition, a shorter retransmission interval is specified when the CPU utilization is low, to avoid idle computing power of the CPU.

Manner (3-B): The network device determines the first duration based on the quantity of buffered packets. A larger quantity of buffered packets indicates longer first duration.

Because the network device considers the quantity of buffered packets when specifying the retransmission interval, a longer retransmission interval is specified when the quantity of buffered packets is large, to avoid an avalanche effect triggered when a large quantity of backlogged packets are not processed on the network side and the client continues to retransmit the online request.

In some embodiments, any combination of Manner 1 to Manner 3 is performed. To be specific, the network device performs two or more of Manner 1 to Manner 3. A combination of Manner 1, Manner 2, and Manner 3 is used as an example. For example, the network device determines the first duration based on the level of the first client, the online information of the first client, and the capability data of the network device. For example, the network device determines an adjustment coefficient and a suppression coefficient based on the level of the first client, the online information of the first client, and the capability data of the network device, and determines the first duration based on the adjustment coefficient and the suppression coefficient.

The adjustment coefficient is a coefficient for adjusting a value of the first duration. A larger adjustment coefficient indicates longer first duration. The adjustment coefficient is determined based on the capability data of the network device, for example, determined based on the status of the CPU of the network device and the quantity of buffered packets. For example, higher CPU utilization indicates a larger adjustment coefficient. A larger quantity of buffered packets in a buffer queue indicates a larger adjustment coefficient.

The suppression coefficient is a coefficient for suppressing a value of the first duration. A less suppression coefficient indicates shorter first duration. The suppression coefficient is determined based on the online information of the client and the level of the client. For example, a suppression coefficient corresponding to a client that does not go online for the first time is greater than a suppression coefficient corresponding to a client that goes online for the first time. A suppression coefficient corresponding to a higher-level client (for example, a client having a higher requirement on quality of service of a user) is less than a suppression coefficient corresponding to a lower-level client.

For example, the network device determines the first duration based on the adjustment coefficient and the suppression coefficient and according to the following Formula (1):

$$\text{Retransmission interval} = (\text{Maximum processing capability of a current system for a DHCP packet}/ \text{quantity of currently recieved packets}) * \text{adjustment coefficient} * \text{suppression coefficient} \qquad \text{Formula (1)}$$

When the network device determines the first duration according to Formula (1), the maximum processing capability of the current system for the DHCP packet in Formula (1) is, for example, a maximum value of a packet processing capability of the network device for the DHCP packet when the network device determines the first duration. The quantity of currently received packets in Formula (1) is, for example, a quantity of DHCP packets received when the network device determines the first duration, or a sum of quantities of packets of various protocols that have been received by the network device. The retransmission interval in Formula (1) is, for example, the first duration.

In some embodiments, the network device controls the retransmission interval of the client depending on whether the network device is overloaded. Specifically, the network device determines load of the network device, and compares the load of the network device with a threshold. If the load of the network device is greater than or equal to the threshold, the network device determines that the network device is in an overloaded state; or if the load of the network device is less than the threshold, the network device determines that the network device is in a non-overloaded state, where the load of the network device is, for example, indicated by the capability data of the network device. The threshold is, for example, a capability data threshold. For example, there are specifically three types of thresholds. One threshold is a CPU utilization threshold, another threshold is a packet quantity threshold, and the remaining threshold is a ratio threshold between a quantity of packets processed in unit time and a maximum value of a packet processing capability. The CPU utilization threshold, the packet quantity threshold, and the ratio threshold are, for example, preset thresholds. If the CPU utilization is greater than the CPU utilization threshold, the quantity of buffered packets is greater than the packet quantity threshold, or the ratio is greater than the ratio threshold, the network device determines that the network device is in the overloaded state.

There are a plurality of manners for the network device to specifically control the retransmission interval when the network device is overloaded. The following describes Manner A to Manner C.

Manner A: If the load of the network device is greater than or equal to the threshold, the network device increases the sending interval of the online request packet by second duration, to obtain the first duration.

The second duration is an increment of the sending interval. For example, the second duration is a step size used when the sending interval is adjusted. The second duration is, for example, preset duration, or is duration calculated by using an algorithm. For example, the network device originally specifies duration m as the sending interval of the online request packet. When the network device is overloaded, the network device increases the duration m by duration n (the second duration). In this case, retransmission duration (the first duration) is the duration m (the sending interval of the online request packet) + the duration n (the second duration), so that the retransmission duration becomes longer.

In Manner A, because the network device increases the retransmission duration when the network device is overloaded, the retransmission duration increases when the network device is heavily loaded. This helps adaptively adjust the retransmission duration with a load status of the network side, to improve flexibility.

Manner B: If the load of the network device is less than the threshold, the network device decreases the sending interval of the online request packet by third duration, to obtain the first duration.

The third duration is a decrement of the sending interval. For example, the third duration is a step size used when the sending interval is adjusted. The third duration is, for example, preset duration, or is duration calculated by using an algorithm. For example, the network device originally specifies duration m as the sending interval of the online request packet. When the network device is non-overloaded, the network device decreases the duration m by duration n (the third duration). In this case, retransmission duration (the first duration) is the duration m (the sending interval of the online request packet) - the duration n (the third duration), so that the retransmission duration becomes shorter.

In Manner B, because the network device decreases the retransmission duration when the network device is non-overloaded, the retransmission duration decreases when the network device is lightly loaded. This helps adaptively adjust the retransmission duration with a load status of the network side, to improve flexibility.

Manner C: If the load of the network device is greater than or equal to the threshold, the network device performs steps of determining the first duration, and generating and sending an advertisement packet. If the load of the network device is less than the threshold, the network device returns a reply packet for the online request packet. In other words, whether the network device is overloaded is used as a trigger condition for advertising the retransmission interval. When the network device is overloaded, a step of advertising the retransmission interval is performed. When the network device is non-overloaded, for example, processing is performed based on an original online process.

It can be learned from the foregoing enumerated manners such as Manner 1 to Manner 3 and Manner A to Manner C in which the first duration is determined, compared with a current manner in which a server passively processes an online request packet in a client/server mode, this embodiment provides a central control idea: The network side (for example, a DHCP relay or a DHCP server) collects information such as the processing capability of the network side, the online information of the client, the level of the client, and the load of the network side, and determines the retransmission interval for the client with reference to the information, so that the network side actively intervenes in a process of determining the retransmission interval. This helps the retransmission interval match the packet processing capability of the network side, whether the client goes online for the first time or not, the level of the client, the load of the network side, and another case. Therefore, the retransmission interval is more accurate. The network side controls the client to send the online request packet based on the retransmission interval, to improve overall system performance.

S340: The network device generates an advertisement packet, where the advertisement packet carries the first duration.

After determining the first duration, the network device writes the first duration into the advertisement packet, so that the advertisement packet carries the first duration. The advertisement packet indicates the first client to adjust the sending interval of the online request packet to the first duration. For example, the network device writes the first duration into a retransmission option in the advertisement packet, so that the retransmission option includes the first duration. Refer to FIG. 6 and FIG. 7. FIG. 6 and FIG. 7 are examples for describing the advertisement packet generated by the network device.

S350: The network device sends the advertisement packet to the first client, where the advertisement packet indicates the first client to adjust the sending interval of the online request packet to the first duration.

Because the network device performs the foregoing steps of determining the first duration, generating the advertisement packet, and sending the advertisement packet, an online behavior of the client (for example, a DHCP client) is changed from an individual behavior to centralized control on the network side (for example, a DHCP relay or a DHCP server), to implement a function of actively controlling retransmission of the client (for example, a DHCP client) on the network side, so that the entire system has a central optimization capability, to ensure online efficiency of the system and improve system performance. In addition, the system actively defends against a possible attack, to avoid an avalanche effect caused by processing of a large quantity of packets.

In the invention, the network device responds to the first online request packet by sending the advertisement packet to the first client. In other words, the step of returning a response packet for the first online request packet is replaced with the step of sending the advertisement packet to the first client. For example, in the DHCPv4 scenario, when a DHCP server or a DHCP relay (the network device) receives a DHCP discover packet (the first online request packet), the DHCP server or the DHCP relay sends an advertisement packet to a DHCP client to respond to the DHCP discover packet, and no longer returns a DHCP offer packet. For example, in the DHCPv6 scenario, when a DHCP server or a DHCP relay (the network device) receives a DHCP solicit packet (the first online request packet), the DHCP server or the DHCP relay sends an advertisement packet to a DHCP client to respond to the DHCP solicit packet, and no longer returns a DHCP advertise packet.

S360: The first client receives the advertisement packet.

S370: The first client obtains the first duration carried in the advertisement packet.

S380: The first client sends an online request packet at an interval of the first duration.

The first client adjusts the sending interval of the online request packet to the first duration, to adjust the retransmission interval based on an indication of the advertisement packet. For example, the first client increases the first duration on the basis of a time point for sending the first online request packet, and uses an obtained time point as a time point for sending the online request packet next time. When the time point arrives, the first client sends the online request packet again.

In some embodiments, the first client regenerates an online request packet at an interval of the first duration, and sends the regenerated online request packet. In some other embodiments, after generating the online request packet, the first client buffers the online request packet. When no reply packet of a server is received before timeout, the first client sends the buffered online request packet at an interval of the first duration.

In some embodiments, a receiving end of the online request packet is the same as a transmitting end of the advertisement packet. For example, the client sends the online request packet to the network device at an interval of the first duration, where the advertisement packet is sent by the network device.

In some embodiments, when the online request packet is discarded, the first client chooses, based on a capability of the first client, whether to respond to the advertisement packet. If the first client supports responding to the advertisement packet, the first client retransmits the online request packet based on the first duration indicated by the advertisement packet. If the first client does not support responding to the advertisement packet, the first client retransmits the online request packet based on a retransmission capability of the first client.

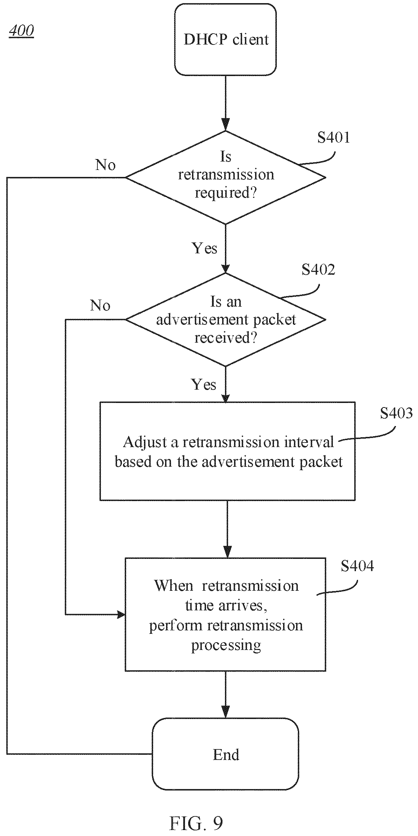

For example, FIG. 9 shows a method procedure on a side of a DHCP client in an embodiment. A method 400 performed by the DHCP client includes the following S401 to S404.

S401: The DHCP client determines whether retransmission is required. If retransmission is required, the DHCP client performs the following S402.

S402: The DHCP client determines whether the DHCP client receives an advertisement packet. If the DHCP client receives the advertisement packet, the DHCP client performs the following S403. If the DHCP client does not receive the advertisement packet, the DHCP client determines a retransmission interval.

S403: The DHCP client adjusts the retransmission interval based on the advertisement packet, for example, adjusts a sending interval of an online request packet to first duration.

S404: When retransmission time arrives, the DHCP client performs retransmission processing, that is, resends the online request packet.

There are a plurality of cases for an action performed when a network device receives the online request packet again. In some embodiments, when receiving the online request packet again, the network device determines that load is less than a threshold and the network device has time to process the online request packet. In this case, the network device processes the online request packet, and returns a reply packet corresponding to the online request packet to the first client. For another example, when the network device receives the online request packet again, if a packet processing capability of the network device changes or due to another factor, the network device re-determines first duration, includes the re-determined first duration in the advertisement packet, and sends the advertisement packet to the first client, to update the retransmission interval of the first client.

In some embodiments, the network device suppresses receiving of an online request from a specific client by establishing a blocklist. An example in which a second client uses the blocklist is used. The second client and the first client are, for example, two different clients. For another example, the second client and the first client are a same client. Specifically, the network device creates a second entry in the blocklist based on a source address of the second client. The second client generates a second online request packet and sends the second online request packet to the network device. The network device receives the second online request packet; and the network device queries the blocklist based on a source address of the second online request packet. The network device discards the second online request packet in response to a case in which the second online request packet hits the second entry in the blocklist. In addition, if the second online request packet does not hit any entry in the blocklist, the network device, for example, sends the advertisement packet carrying the retransmission interval to the second client. For another example, the network device processes the second online request packet.

The blocklist (blocklist) is a user table for refusing to pass an online request. The blocklist includes at least one entry, and each entry indicates one user that refuses to pass the online request.

In some embodiments, the blocklist is used to record a client to which the retransmission interval is advertised. For example, if a DHCP server sends an advertisement packet carrying a retransmission interval to a DHCP client A, the DHCP server adds the DHCP client A to a blocklist. In some embodiments, the blocklist stores a source address (for example, a source MAC address) of a client. For example, each entry in the blocklist stores a source address (for example, a source MAC address) of a client. For example, the second entry includes the source address of the second client (for example, a MAC address of the second client).

In some embodiments, the foregoing step of establishing the blocklist is performed by a control plane of the network device. After establishing the blocklist, the control plane delivers the blocklist to a forwarding plane. The forwarding plane stores the blocklist created by the control plane. After receiving the online request packet, the forwarding plane queries the blocklist based on a source address of the online request packet. If the forwarding plane finds that the online request packet hits the blocklist, the forwarding plane discards the online request packet. If the forwarding plane finds that the online request packet does not hit the blocklist, the forwarding plane sends the online request packet to the control plane. The forwarding plane is, for example, a physical interface card of the network device, and the control plane is, for example, a CPU of the network device.

In some embodiments, the blocklist further includes survival duration. The survival duration is also referred to as a survival cycle or active time. The survival duration is duration between a time point when the entry is created in the blocklist and a time point when the entry is deleted. For example, when an entry is created in the blocklist, a timer is started. If recorded duration exceeds survival duration of the entry and no packet is received from the client, the entry is used as an aged entry and deleted from the blocklist. If the recorded duration does not exceed the survival duration, the entry remains valid. In some other embodiments, the survival duration is stored in another entry associated with the blocklist.

In some embodiments, each client corresponds to one piece of survival duration, and survival duration corresponding to different clients is the same or different. For example, an entry A in the blocklist records a source MAC address of a client A, and survival duration of the entry A is a sending interval at which the specified client A retransmits an online request packet.

In some embodiments, the survival duration of the blocklist is the same as the retransmission interval. For example, survival duration of the second entry is the same as duration carried in the advertisement packet sent to the second client. In some embodiments, the second entry includes two entries, one entry includes the sending interval corresponding to the second client, and the other entry includes the source MAC address of the second client.

In some embodiments, the second online request packet includes the source address of the second client, and the network device obtains the source address of the second client from the second online request packet, and queries the blocklist based on the source address of the second client. For example, the source address of the second client is a source MAC address used by the second client to send a packet. The network device performs matching between a source MAC address of the second online request packet and a MAC address stored in each entry in the blocklist, determines that the source MAC address of the second online request packet is the same as the MAC address in the second entry, and then determines that the second online request packet hits the second entry.

In some embodiments, a process of using a blocklist for a client (for example, the first client) to which a retransmission interval is advertised includes Step 1 to Step 3 below.

Step 1: The network device creates a first entry in a blocklist, where the first entry includes a source address of the first client, survival duration of the first entry is the same as the first duration, and the survival duration is duration between a time point when the first entry is created and a time point when the first entry is deleted.

Step 2: The network device receives a third online request packet.

The third online request packet includes the source address of the first client. For example, a source MAC field in a MAC frame header of the third online request packet includes the source MAC address of the first client.

Step 3: The network device discards the third online request packet in response to a case in which the third online request packet hits the first entry.

The survival duration of the entry in the blocklist is the same as the duration carried in the advertisement packet. Even if the client does not retransmit the online request packet based on retransmission time specified by the server, for example, the client retransmits the online request packet before the retransmission time specified by the server, because the sending interval at which the client sends the online request packet is shorter than the survival duration, when the server receives the online request packet again, the entry corresponding to the client is still in a survival state. Therefore, the server discards the online request packet of the client because the client is in the blocklist, to suppress the online request packet. If the client retransmits the online request packet based on the retransmission time specified by the server, because the sending interval at which the client sends the online request packet is greater than or equal to the survival duration, when the server receives the online request packet again, the entry corresponding to the client is cleared due to aging, so that the online request packet of the client can be processed.

In some embodiments, after generating the advertisement packet, the network device stores the advertisement packet in forwarding hardware. When discarding the online request packet (for example, the second online request packet or the third online request packet), the network device sends a prestored packet to be retransmitted to the client (for example, the first client or the second client).

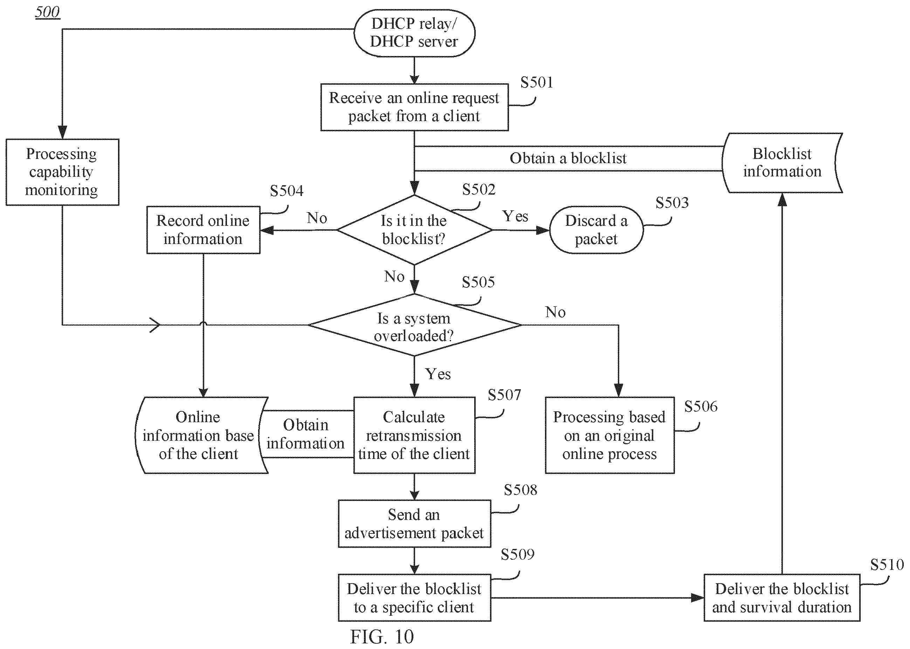

For example, FIG. 10 shows a method procedure on a side of a DHCP server or a DHCP relay in an embodiment. A method 500 performed by the DHCP server or the DHCP relay includes the following S501 to S510.

S501: The DHCP server or the DHCP relay receives an online request packet sent by a DHCP client.

S502: The DHCP server or the DHCP relay obtains a blocklist, and determines whether the DHCP client is in the blocklist. If the DHCP client is in the blocklist, the DHCP server or the DHCP relay performs S503. If the DHCP client is not in the blocklist, the DHCP server or the DHCP relay performs S504 and S505.

S503: The DHCP server or the DHCP relay discards the online request packet.

S504: The DHCP server or the DHCP relay records online information for the DHCP client.

S505: The DHCP server or the DHCP relay determines whether a system is overloaded. If the system is non-overloaded, for example, load of the DHCP server or the DHCP relay is lower than a threshold, the DHCP server or the DHCP relay performs S506. If the system is overloaded, for example, load of the DHCP server or the DHCP relay is greater than or equal to a threshold, the DHCP server or the DHCP relay performs S507.

S506: The DHCP server or the DHCP relay performs processing based on an original online process.

S507: The DHCP server or the DHCP relay calculates retransmission time of the DHCP client based on a monitored processing capability (such as capability data), online information obtained from an online information base of the DHCP client, and a level of the DHCP client.

S508: The DHCP server or the DHCP relay sends an advertisement packet.

S509: The DHCP server or the DHCP relay delivers the blocklist to a specific DHCP client (for example, the DHCP client that sends the online request packet).

S510: The DHCP server or the DHCP relay stores the blocklist and survival duration in the blocklist for the specific DHCP client (for example, the DHCP client that sends the online request packet).

In the foregoing method, on the basis that the DHCP relay/DHCP server controls the retransmission time of the DHCP client, after sending the advertisement packet to the DHCP client, the DHCP relay/DHCP server further delivers the blocklist to the DHCP client, and the survival duration of the blocklist is the same as a retransmission interval, so that even if the DHCP client does not send the online request packet based on the retransmission interval, a processing capability of the system can still be ensured.

This embodiment provides a method for supporting a network side in controlling a client to retransmit an online request packet. A network device determines a sending interval of an online request packet for a client, and transmits the sending interval to the client by using an advertisement packet, so that the client retransmits the online request packet based on the interval specified by the network side. Compared with a mechanism in which the client determines the sending interval to retransmit the online request packet, the network side changes from passively responding to an online request sending behavior of the client to actively controlling the online request sending behavior of the client. This significantly enhances intervention of the network side in a retransmission mechanism. Therefore, a limitation of a current method for a client to go online is resolved to some extent, to help avoid a problem such as an avalanche effect triggered by the client performing uncontrolled retransmission based on a sending interval determined by the client, and improve efficiency and robustness of the entire system.

The following describes a network device 600. The network device 600 has any function of the network device in the foregoing method embodiments.

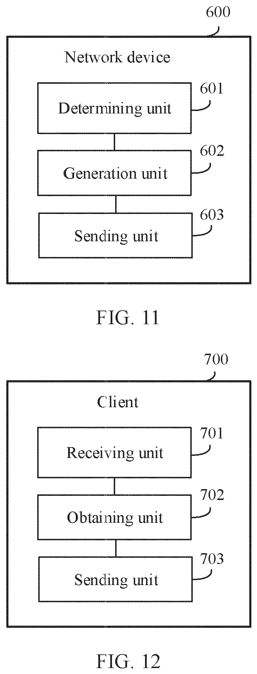

FIG. 11 is a possible schematic diagram of a structure of the network device 600. The network device 600 shown in FIG. 11 implements, for example, a function of the network device in the method 300, or the network device 600 implements a function of the DHCP server or the DHCP relay in the method 500.

Refer to FIG. 11. The network device 600 includes a determining unit 601, a generation unit 602, and a sending unit 603. All or some of the units in the network device 600 are implemented by using software, hardware, firmware, or any combination thereof. Each unit in the network device 600 is configured to perform a corresponding function of the network device, the DHCP server, or the DHCP relay in the foregoing method 300. For example, the determining unit 601 is configured to support the network device 600 in performing at least one of S330, S507, or S505. The generation unit 602 is configured to support the network device 600 in performing S340. The sending unit 603 is configured to support the network device 600 in performing 350 or S508.

In this embodiment of this application, division into the units is an example, and is merely logical function division. During actual implementation, another division manner may be optionally used.

In some embodiments, the units in the network device 600 are integrated into one processing unit. For example, units in the network device 600 are integrated on a same chip. The chip includes a processing circuit, and an input interface and an output interface that are internally connected to and communicate with the processing circuit. The determining unit 601 is implemented by using a processing circuit in a chip. The generation unit 602 is implemented through the input interface in a chip. The sending unit 603 is implemented through the output interface in the chip. For example, the chip is implemented by using one or more field programmable gate arrays (English full name: field programmable gate arrays, FPGAs for short), a programmable logic device (English full name: programmable logic device, PLD for short), a controller, a state machine, gate logic, a discrete hardware component, any other appropriate circuit, or any combination of circuits that can perform various functions described in this application.

In some other embodiments, each unit in the network device 600 exists alone physically. In some other embodiments, some units of the network device 600 exist alone physically, and the other units are integrated into one unit. For example, in some embodiments, the determining unit 601 and the generation unit 602 are a same unit. In some other embodiments, the determining unit 601 and the generation unit 602 are different units. In some embodiments, integration of different units is implemented in a form of hardware, that is, different units correspond to same hardware. For another example, integration of different units is implemented in a form of a software unit.

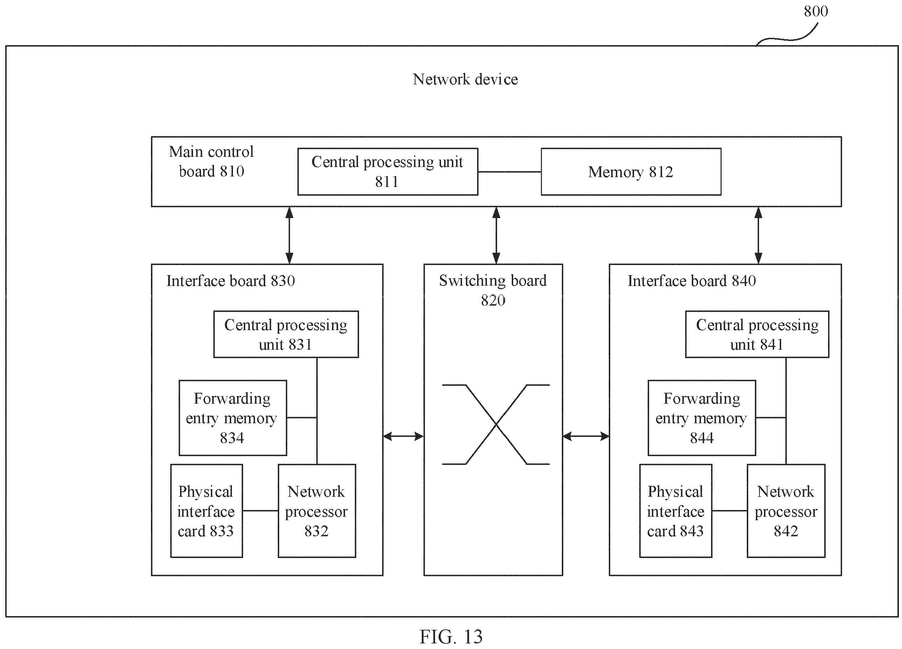

When the network device 600 is implemented by using hardware, the determining unit 601 and the generation unit 602 in the network device 600 are implemented, for example, by using a processor. For example, the determining unit 601 is implemented by using a main control board 810 of a network device 800 shown in FIG. 13. For example, the determining unit 601 is implemented by using a central processing unit 811. For another example, the generation unit 602 is implemented by using an interface board 830 of the network device 800 shown in FIG. 13. For example, the generation unit 602 is implemented by using a network processor 832. The sending unit 603 in the network device 600 is implemented, for example, by using the interface board 830 of the network device 800 shown in FIG. 13. For example, the sending unit 603 is implemented by using a physical interface card 833.

When the network device 600 is implemented by using software, the units in the network device 600 are, for example, software generated by a processor (for example, the central processing unit 811 in the network device 800 shown in FIG. 13) by reading program code stored in a memory (for example, a memory 812 in the network device 800 shown in FIG. 13). For example, the network device 600 is a virtualized device. The virtualized device includes but is not limited to at least one of a virtual machine, a container, and a pod. In some embodiments, the network device 600 is deployed on a hardware device (for example, a physical server) in a form of the virtual machine. For example, the network device 600 is implemented based on a general-purpose physical server in combination with a network functions virtualization (Network Functions Virtualization, NFV) technology. When a manner of the virtual machine is used for implementation, the network device 600 is, for example, a virtual host, a virtual router, or a virtual switch. By reading this application, persons skilled in the art may virtualize the network device 600 on a general-purpose physical server in combination with the NFV technology. In some other embodiments, the network device 600 is deployed on a hardware device in a form of a container (for example, a docker container). For example, a procedure in which the network device 600 performs the foregoing method embodiment is encapsulated in an image file, and the hardware device creates the network device 600 by running the image file. In some other embodiments, the network device 600 is deployed on a hardware device in a form of the pod. The pod includes a plurality of containers, and each container is configured to implement one or more units in the network device 600.

The following describes a client 700. The client 700 has any function of the client in the foregoing method embodiments.

FIG. 12 is a possible schematic diagram of a structure of the client 700. The client 700 shown in FIG. 12 implements, for example, a function of the client (for example, the DHCP client) in the method 300 or the method 400.

Refer to FIG. 12. The client 700 includes a receiving unit 701, an obtaining unit 702, and a sending unit 703. All or some of the units in the client 700 are implemented by using software, hardware, firmware, or any combination thereof. The units in the client 700 are configured to perform a corresponding function of the client (for example, the DHCP client) in the method 300 or the method 400. Specifically, the receiving unit 701 is configured to support the client 700 in performing S360 or S402. The obtaining unit 702 is configured to support the client 700 in performing S370. The sending unit 703 is configured to support the client 700 in performing S380 or S404.

In this embodiment of this application, division into the units is an example, and is merely logical function division. During actual implementation, another division manner may be optionally used.

In some embodiments, the units in the client 700 are integrated into one processing unit. For example, the units in the client 700 are integrated on a same chip. The chip includes a processing circuit, and an input interface and an output interface that are internally connected to and communicate with the processing circuit. The obtaining unit 702 is implemented by using a processing circuit in a chip. The receiving unit 701 is implemented through the input interface in the chip. The sending unit 703 is implemented through the output interface in the chip. For example, the chip is implemented by using one or more field programmable gate arrays (English full name: field programmable gate arrays, FPGAs for short), a programmable logic device (English full name: programmable logic device, PLD for short), a controller, a state machine, gate logic, a discrete hardware component, any other appropriate circuit, or any combination of circuits that can perform various functions described in this application.

In some other embodiments, each unit in the client 700 exists alone physically. In some other embodiments, some units of the client 700 exist alone physically, and the other units are integrated into one unit. For example, in some embodiments, the obtaining unit 702 and the sending unit 703 are a same unit. In some other embodiments, the obtaining unit 702 and the sending unit 703 are different units. In some embodiments, integration of different units is implemented in a form of hardware, that is, different units correspond to same hardware. For another example, integration of different units is implemented in a form of a software unit.

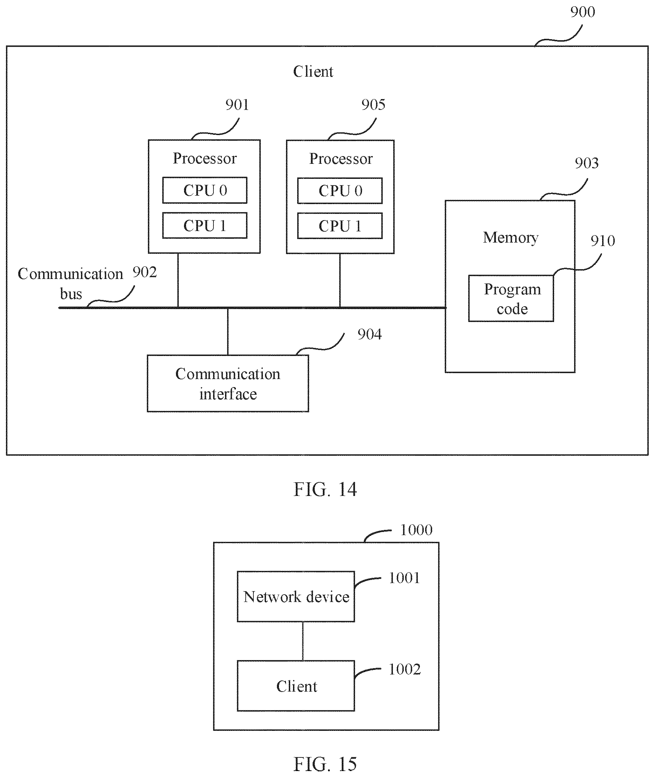

When the client 700 is implemented by using hardware, the obtaining unit 702 in the client 700 is implemented, for example, by using a processor. For example, the obtaining unit 702 is implemented, for example, by using a processor 901 of a client 900 shown in FIG. 14. The receiving unit 701 and the sending unit 703 in the client 700 are implemented, for example, through a communication interface. For example, the receiving unit 701 and the sending unit 703 are implemented through a communication interface 904 in the client 900 shown in FIG. 14.

When the client 700 is implemented by using software, the units in the client 700 are, for example, software generated by a processor (for example, the processor 901 in the client 900 shown in FIG. 14) by reading program code stored in a memory (for example, a memory 903 in the client 900 shown in FIG. 14). For example, the client 700 is a virtualized device. The virtualized device includes but is not limited to at least one of a virtual machine, a container, and a pod. In some embodiments, the client 700 is deployed on a hardware device (for example, a physical server) in a form of the virtual machine. For example, the client 700 is implemented based on a general-purpose physical server in combination with an NFV technology. When a manner of the virtual machine is used for implementation, the client 700 is, for example, a virtual host, a virtual router, or a virtual switch. By reading this application, persons skilled in the art may virtualize the client 700 on a general-purpose physical server in combination with the NFV technology. In some other embodiments, the client 700 is deployed on a hardware device in a form of a container (for example, a docker container). For example, a procedure in which the client 700 performs the foregoing method embodiment is encapsulated in an image file, and the hardware device creates the client 700 by running the image file. In some other embodiments, the client 700 is deployed on the hardware device in a form of the pod. The pod includes a plurality of containers, and each container is configured to implement one or more units in the client 700.

The foregoing describes, by using the network device 600, how to implement a network device (for example, a DHCP server or a DHCP relay) from a perspective of a logical function. The following describes, by using the network device 800, how to implement a network device (for example, a DHCP server or a DHCP relay) from a perspective of hardware. The network device 800 shown in FIG. 13 is an example of a hardware structure of a network device (for example, a DHCP server or a DHCP relay).

The network device 800 corresponds to the network device (for example, the DHCP server or the DHCP relay) in the method 300 or the method 500. Hardware, modules, and other operations and/or functions in the network device 800 are separately configured to implement various steps and methods implemented by the network device (for example, the DHCP server or the DHCP relay) in the method embodiments. For a detailed procedure of how the network device 800 controls the client to go online, refer to the method 300 or the method 500. For brevity, details are not described herein again. The steps of the method 300 or the method 500 are completed by using an integrated logic circuit of hardware in a processor in the network device 800 or instructions in a form of software. The steps of the methods disclosed with reference to embodiments of this application may be directly performed and completed by a hardware processor, or may be performed and completed by using a combination of hardware in the processor and a software module. The software module is located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware in the processor. To avoid repetition, details are not described herein again.

FIG. 13 is a schematic diagram of a structure of a network device according to an example embodiment of this application. For example, the network device 800 is configured as the network device (such as the DHCP server or the DHCP relay) in the method 300 or the method 500. The network device 800 includes a main control board 810 and an interface board 830.

The main control board is also referred to as a main processing unit (main processing unit, MPU) or a route processor card (route processor card). The main control board 810 is configured to control and manage components in the network device 800, including routing calculation, device management, device maintenance, and protocol processing. The main control board 810 includes a central processing unit 811 and a memory 812.

The interface board 830 is also referred to as a line processing unit (line processing unit, LPU), a line card (line card), or a service board. The interface board 830 is configured to provide various service interfaces, and forward a data packet. The service interface includes but is not limited to an Ethernet interface, a POS (Packet over SONET/SDH) interface, and the like. The Ethernet interface is, for example, a flexible Ethernet service interface (Flexible Ethernet clients, FlexE clients). The interface board 830 includes a central processing unit 831, a network processor 832, a forwarding entry memory 834, and a physical interface card (physical interface card, PIC) 833.

The central processing unit 831 on the interface board 830 is configured to: control and manage the interface board 830, and communicate with the central processing unit 811 on the main control board 810.

The network processor 832 is configured to forward a packet. For example, a form of the network processor 832 may be a forwarding chip. Specifically, the network processor 832 is configured to forward a received packet based on a forwarding table stored in the forwarding entry memory 834. If a destination address of the packet is an address of the network device 800, the network processor 832 sends the packet to a CPU (for example, the central processing unit 811) for processing. If the destination address of the packet is not the address of the network device 800, the network processor 832 searches for, based on the destination address, a next hop and an outbound interface corresponding to the destination address in the forwarding table, and forwards the packet to the outbound interface corresponding to the destination address. Processing on an uplink packet includes processing on a packet inbound interface and forwarding table lookup. Processing on a downlink packet includes forwarding table lookup and the like.

The physical interface card 833 is configured to implement a physical layer interconnection function. Original traffic enters the interface board 830 from the physical interface card 833, and a processed packet is sent out from the physical interface card 833. The physical interface card 833, also referred to as a subcard, may be mounted on the interface board 830, and is responsible for converting an optical/electrical signal into a packet, performing validity check on the packet, and forwarding the packet to the network processor 832 for processing. In some embodiments, the central processing unit may also perform a function of the network processor 832, for example, implement software forwarding based on a general-purpose CPU. Therefore, the network processor 832 is not required in the physical interface card 833.

Optionally, the network device 800 includes a plurality of interface boards. For example, the network device 800 further includes an interface board 840, and the interface board 840 includes a central processing unit 841, a network processor 842, a forwarding entry memory 844, and a physical interface card 843.

Optionally, the network device 800 further includes a switching board 820. For example, the switching board 820 may also be referred to as a switch fabric unit (switch fabric unit, SFU). When the network device has a plurality of interface boards 830, the switching board 820 is configured to complete data exchange between the interface boards. For example, the interface board 830 and the interface board 840 communicate with each other via the switching board 820.

The main control board 810 is coupled to the interface board 830. For example, the main control board 810, the interface board 830, the interface board 840, and the switching board 820 are connected to a system backplane by using a system bus to implement interworking. In a possible implementation, an inter-process communication (inter-process communication, IPC) channel is established between the main control board 810 and the interface board 830, and the main control board 810 communicates with the interface board 830 through the IPC channel.

Logically, the network device 800 includes a control plane and a forwarding plane. The control plane includes the main control board 810 and the central processing unit 831. The forwarding plane includes components that perform forwarding, such as the forwarding entry memory 834, the physical interface card 833, and the network processor 832. The control plane performs functions such as routing, generating a forwarding table, processing signaling and a protocol packet, and configuring and maintaining a device status. The control plane delivers the generated forwarding table to the forwarding plane. On the forwarding plane, by performing table lookup based on the forwarding table delivered by the control plane, the network processor 832 forwards a packet received by the physical interface card 833. The forwarding table delivered by the control plane is stored, for example, in the forwarding entry memory 834. In some embodiments, the control plane and the forwarding plane are, for example, completely separated, and are not on a same device.

It should be understood that an operation on the interface board 840 is consistent with an operation on the interface board 830 in this embodiment of this application. For brevity, details are not described again. It should be understood that the network device 800 in this embodiment may correspond to the network device (for example, the DHCP server or the DHCP relay) in the foregoing method embodiments. The main control board 810, the interface board 830, and/or the interface board 840 in the network device 800 implement, for example, functions and/or steps implemented by the network device (for example, the DHCP server or the DHCP relay) in the foregoing method embodiments. For brevity, details are not described herein again.

It should be noted that there may be one or more main control boards. When there are a plurality of main control boards, the main control boards may include, for example, an active main control board and a standby main control board. There may be one or more interface boards, and a network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board provides a function of processing service data in an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is better than that of the device in the centralized architecture. Optionally, the network device may alternatively be in a form in which there is only one card. To be specific, there is no switching board, and functions of the interface board and the main control board are integrated on the card. In this case, a central processing unit in the interface board and a central processing unit in the main control board may be combined to form one central processing unit in the card, to perform functions obtained after the two central processing units are combined. The device of this form (for example, a network device such as a low-end switch or a router) has a weak data exchange and processing capability. A specific architecture that is to be used depends on a specific networking deployment scenario. This is not limited herein.

The foregoing describes how to implement a client (for example, a DHCP client) from a perspective of a logical function by using the client 700. The following describes how to implement a client (for example, a DHCP client) from a perspective of hardware by using a client 900. The client 900 shown in FIG. 14 is an example of a hardware structure of a client (for example, a DHCP client).

The client 900 corresponds to the client (for example, the DHCP client) in the method 300 or the method 400. Hardware, modules, and other operations and/or functions in the client 900 are separately configured to implement various steps and methods implemented by the client (for example, the DHCP client) in the method embodiments. For a detailed procedure of how the client 900 goes online, refer to the method 300 or the method 400. For brevity, details are not described herein again. The steps of the method 300 or the method 400 are completed by using an integrated logic circuit of hardware in a processor in the client 900 or instructions in a form of software. The steps of the methods disclosed with reference to embodiments of this application may be directly performed and completed by a hardware processor, or may be performed and completed by using a combination of hardware in the processor and a software module. The software module is located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware in the processor. To avoid repetition, details are not described herein again.

FIG. 14 is a schematic diagram of a structure of a client according to an example embodiment of this application. For example, the client 900 is configured as the client (for example, the DHCP client) in the method 300 or the method 400. The client 900 may be a host, a server, a personal computer, or the like. The client 900 may be implemented by using a general bus architecture.

The client 900 includes at least one processor 901, a communication bus 902, a memory 903, and at least one communication interface 904.

The processor 901 is, for example, a general-purpose central processing unit (central processing unit, CPU), a network processor (network processor, NP), a graphics processing unit (Graphics Processing Unit, GPU), a neural network processor (neural network processing unit, NPU), a data processing unit (Data Processing Unit, DPU), a microprocessor, or one or more integrated circuits configured to implement the solutions of this application. For example, the processor 901 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field programmable gate array (field programmable gate array, FPGA), generic array logic (generic array logic, GAL), or any combination thereof.

The communication bus 902 is configured to transfer information between the foregoing components. The communication bus 902 may be classified into an address bus, a data bus, a control bus, and the like. For ease of representation, only one thick line is used to represent the communication bus 902 in FIG. 14, but this does not mean that there is only one bus or only one type of bus.

The memory 903 is, for example, a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can be for carrying or storing expected program code in a form of instructions or a data structure and that can be accessed by a computer. However, the memory 903 is not limited thereto. The memory 903, for example, exists independently, and is connected to the processor 901 by using the communication bus 902. Alternatively, the memory 903 and the processor 901 may be integrated together.

The communication interface 904 uses any apparatus such as a transceiver, and is configured to communicate with another device or a communication network. The communication interface 904 includes a wired communication interface, and may include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, or a combination thereof.

During specific implementation, in an embodiment, the processor 901 may include one or more CPUs, for example, a CPU 0 and a CPU 1 shown in FIG. 14.

During specific implementation, in an embodiment, the client 900 may include a plurality of processors, for example, the processor 901 and a processor 905 in FIG. 14. Each of the processors may be a single-core processor (single-CPU) or may be a multi-core processor (multi-CPU). The processor herein may refer to one or more devices, circuits, and/or processing cores configured to process data (such as computer program instructions).

During specific implementation, in an embodiment, the client 900 may further include an output device and an input device. The output device communicates with the processor 901, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 901, and may receive an input from a user in a plurality of manners. For example, the input device may be a mouse, a keyboard, a touchscreen device, or a sensing device.

In some embodiments, the memory 903 is configured to store program code 910 for executing the solutions of this application, and the processor 901 may execute the program code 910 stored in the memory 903. In other words, the client 900 may implement, by using the processor 901 and the program code 910 in the memory 903, the method for a client to go online provided in the method embodiments.

The client 900 in this embodiment of this application may correspond to the client (for example, the DHCP client) in the foregoing method embodiments. In addition, the processor 901, the communication interface 904, and the like in the client 900 may implement functions of the client (for example, the DHCP client) and/or various steps and methods implemented by the client (for example, the DHCP client) in the foregoing method embodiments. For brevity, details are not described herein again.

Refer to FIG. 15. An embodiment of this application provides a network system 1000. The system 1000 includes a network device 1001 and a client 1002. Optionally, the network device 1001 is the network device 600 shown in FIG. 11 or the network device 800 shown in FIG. 13, and the client 1002 is the client 700 shown in FIG. 12 or the client 900 shown in FIG. 14.

In some embodiments, a computer program product is further provided. The computer program product includes computer instructions, and the computer instructions are stored in a computer-readable storage medium. A processor of a network device reads the computer instructions from the computer-readable storage medium, and the processor executes the computer instructions, so that the network device performs the method on a network device side in the foregoing method embodiments.

In some embodiments, a computer program product is further provided. The computer program product includes computer instructions, and the computer instructions are stored in a computer-readable storage medium. A processor of the client reads the computer instructions from the computer-readable storage medium, and the processor executes the computer instructions, so that the client performs the method on a client side in the foregoing method embodiments.

Persons of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment based on functions. Whether the functions are performed by hardware or software depends on particular applications and design constraint conditions of the technical solutions. Persons of ordinary skill in the art may use different methods to implement the described functions for each particular application, but it should not be considered that the implementation goes beyond the scope of this application.

It may be clearly understood by persons skilled in the art that, for the purpose of convenient and brief descriptions, for a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments in this application.

In addition, units in embodiments of this application may be integrated into one processing unit, each of the units may exist alone physically, or two or more units are integrated into one unit. The integrated unit may be implemented in a form of hardware, or may be implemented in a form of a software unit.

When the integrated unit is implemented in a form of a software functional unit and sold or used as an independent product, the integrated unit may be stored in a computer-readable storage medium. Based on such an understanding, the technical solutions of this application essentially, or a part contributing to a conventional technology, or all or some of the technical solutions may be implemented in a form of a software product. The computer software product is stored in a storage medium and includes several instructions for indicating a computer device (which may be a personal computer, a server, or a network device) to perform all or some of the steps of the method described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

In embodiments of this application, terms such as "first" and "second" are used to distinguish same items or similar items that have basically same functions. It should be understood that there is no logical or time sequence dependency between "first" and "second", and a quantity and an execution sequence are not limited. It should also be understood that although terms such as "first" and "second" are used in the following descriptions to describe various elements, these elements should not be limited by the terms. These terms are merely used to distinguish one element from another element. For example, a first client may be referred to as a second client without departing from the scope of the various examples, and similarly, a second client may be referred to as a first client. Both the first client and the second client may be clients, and in some cases may be separate and different clients.

In this application, "at least one" means one or more and "a plurality of" means two or more. The terms "system" and "network" may be used interchangeably in this specification.

It should be further understood that the term "if" may be interpreted as a meaning "when" ("when" or "upon"), "in response to determining", or "in response to detecting". Similarly, based on the context, the phrase "if it is determined that" or "if (a stated condition or event) is detected" may be interpreted as a meaning of "when it is determined that", "in response to determining", "when (a stated condition or event) is detected", or "in response to detecting (a stated condition or event)".

The foregoing descriptions are merely specific implementations of this application, but are not intended to limit the protection scope of this application. Any equivalent modification or replacement readily figured out by persons skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement the embodiments, all or some of the embodiments may be implemented in a form of a computer program **product.** The computer program product includes one or more computer program instructions. When the computer program instructions are loaded and executed on a computer, the procedures or functions according to embodiments of this application are all or partially generated. The computer may be a general-purpose computer, a dedicated computer, a computer network, or another programmable apparatus.

The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired or wireless manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive).

Persons of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

**Claims**

1. A method for controlling a client to go online, comprising:

    receiving (S320), by a network device, a first online request packet sent (S310) from a first client to request allocation of an IP address to the first client, the first online request packet including a source MAC address of the first client;
    determining, by the network device, a first duration (S330);
    generating, by the network device, an advertisement packet, wherein the advertisement packet carries the first duration (S340); and
    sending, by the network device in response to the first online request packet, the advertisement packet to the first client, wherein the advertisement packet indicates the first client to adjust a sending interval of an online request packet to the first duration (S350);
    wherein the network device is a dynamic host configuration protocol server, DHCP, server or a dynamic host configuration protocol relay DHCP relay, and the first client is a dynamic host configuration protocol client DHCP client;
    wherein the advertisement packet is a dynamic host configuration protocol DHCP packet, the DHCP packet comprises a retransmission option, and the retransmission option comprises the first duration;
    **characterised in that** the determining, by the network device, the first duration comprises determining, by the network device, the first duration based on capability data comprising central processing unit CPU utilization of the network device, wherein the capability data indicates a packet processing capability of the network device, and a weaker packet processing capability indicates longer first duration, and the determining, by the network device, the first duration based on capability data comprises determining the first duration based on the CPU utilization, wherein higher CPU utilization indicates longer first duration.

2. The method according to claim 1, wherein the DHCP packet further comprises a DHCP message type field, and the DHCP message type field is used to identify the DHCP packet as the advertisement packet.

3. The method according to claim 1, wherein the determining, by a network device, first duration comprises:

    determining, by the network device, a level of the first client based on the source MAC address of the first client; and
    determining, by the network device, the first duration based on the level of the first client, wherein a higher level of the first client indicates shorter first duration.

4. The method according to claim 1, wherein the determining, by a network device, first duration comprises:
    determining, by the network device, the first duration based on online information of the first client, wherein the online information indicates whether the first client is a client that goes online for the first time.

5. The method according to claim 1 or claim 2, wherein the capability data comprises a quantity of packets buffered by the network device, and the determining, by the network device, the first duration based on capability data comprises: determining, by the network device, the first duration based on the quantity of buffered packets, wherein a larger quantity of buffered packets indicates longer first duration.

6. A network device, wherein the network device is configured to perform any one of the claims 1-5

**Patentansprüche**

1. Verfahren zum Steuern eines Clients, um online zu gehen, umfassend:

Empfangen (S320), durch eine Netzwerkvorrichtung, eines ersten Online-Anforderungspakets, das von einem ersten Client gesendet (S310) wird, um eine Zuweisung einer IP-Adresse an den ersten Client anzufordern, wobei das erste Online-Anforderungspaket eine Quell-MAC-Adresse des ersten Clients beinhaltet;
Bestimmen (S330), durch die Netzwerkvorrichtung, einer ersten Dauer;
Generieren (S340), durch die Netzwerkvorrichtung, eines Ankündigungspakets, wobei das Ankündigungspaket die erste Dauer transportiert; und
Senden (S350), durch die Netzwerkvorrichtung als Reaktion auf das erste Online-Anforderungspaket, des Ankündigungspakets an den ersten Client, wobei das Ankündigungspaket dem ersten Client angibt, ein Sendeintervall eines Online-Anforderungspakets auf die erste Dauer einzustellen;
wobei die Netzwerkvorrichtung ein Dynamic-Host-Configuration-Protocol-Server, DHCP-Server, oder ein Dynamic-Host-Configuration-Protocol-Relais, DHCP-Relais, ist und der erste Client ein Dynamic-Host-Configuration-Protocol-Client, DHCP-Client, ist;
wobei das Ankündigungspaket ein Dynamic-Host-Configuration-Protocol-Paket, DHCP-Paket, ist und das DHCP-Paket eine Option zur erneuten Übertragung umfasst und die Option zur erneuten Übertragung die erste Dauer umfasst;
**dadurch gekennzeichnet, dass** das Bestimmen, durch die Netzwerkvorrichtung, der ersten Dauer Bestimmen, durch die Netzwerkvorrichtung, der ersten Dauer basierend auf Kapazitätsdaten umfasst, welche die Nutzung der zentralen Verarbeitungseinheit, CPU, der Netzwerkvorrichtung umfassen, wobei die Kapazitätsdaten eine Paketverarbeitungskapazität der Netzwerkvorrichtung angeben und eine geringere Paketverarbeitungskapazität eine längere erste Dauer angibt, und das Bestimmen, durch die Netzwerkvorrichtung, der ersten Dauer basierend auf Kapazitätsdaten Bestimmen der ersten Dauer basierend auf der CPU-Nutzung umfasst, wobei eine höhere CPU-Nutzung eine längere erste Dauer angibt.

2. Verfahren nach Anspruch 1, wobei das DHCP-Paket ferner ein DHCP-Nachrichtentypfeld umfasst und das DHCP-Nachrichtentypfeld verwendet wird, um das DHCP-Paket als das Ankündigungspaket zu identifizieren.

3. Verfahren nach Anspruch 1, wobei das Bestimmen, durch eine Netzwerkvorrichtung, der ersten Dauer Folgendes umfasst:

Bestimmen, durch die Netzwerkvorrichtung, einer Ebene des ersten Clients basierend auf der Quell-MAC-Adresse des ersten Clients; und
Bestimmen, durch die Netzwerkvorrichtung, der ersten Dauer basierend auf der Ebene des ersten Clients, wobei eine höhere Ebene des ersten Clients eine kürzere erste Dauer angibt.

4. Verfahren nach Anspruch 1, wobei das Bestimmen, durch eine Netzwerkvorrichtung, der ersten Dauer Folgendes umfasst:
Bestimmen, durch die Netzwerkvorrichtung, der ersten Dauer basierend auf Online-Informationen des ersten Clients, wobei die Online-Informationen angeben, ob der erste Client ein Client ist, der zum ersten Mal online geht.

5. Verfahren nach Anspruch 1 oder Anspruch 2, wobei die Kapazitätsdaten eine Menge von Paketen umfassen, die durch die Netzwerkvorrichtung gepuffert werden, und das Bestimmen, durch die Netzwerkvorrichtung, der ersten Dauer basierend auf den Kapazitätsdaten Folgendes umfasst:
Bestimmen, durch die Netzwerkvorrichtung, der ersten Dauer basierend auf der Menge von gepufferten Paketen, wobei eine größere Menge von gepufferten Paketen eine längere erste Dauer angibt.

6. Netzwerkvorrichtung, wobei die erste Netzwerkvorrichtung dazu konfiguriert ist, einen der Ansprüche 1-5 durchzuführen.

# EP 4 195 539 B1

**Revendications**

1. Procédé de commande de passage en ligne d'un client, comprenant :

   la réception (S320), par un dispositif de réseau, d'un premier paquet de demande de mise en ligne envoyé (S310) par un premier client pour demander l'attribution d'une adresse IP au premier client, le premier paquet de demande de mise en ligne comportant une adresse MAC source du premier client ;
   la détermination, par le dispositif de réseau, d'une première durée (S330) ;
   la génération, par le dispositif de réseau, d'un paquet d'annonce, dans lequel le paquet d'annonce porte la première durée (S340) ; et
   l'envoi, par le dispositif de réseau, en réponse au premier paquet de demande de mise en ligne, du paquet d'annonce au premier client, dans lequel le paquet d'annonce indique au premier client d'ajuster un intervalle d'envoi d'un paquet de demande de mise en ligne à la première durée (S350) ;
   dans lequel le dispositif de réseau est un serveur de protocole de configuration d'hôte dynamique, DHCP, ou un relais de protocole de configuration d'hôte dynamique, DHCP, et le premier client est un client de protocole de configuration d'hôte dynamique, DHCP ;
   dans lequel le paquet d'annonce est un paquet de protocole de configuration d'hôte dynamique, DHCP, le paquet DHCP comprend une option de retransmission, et l'option de retransmission comprend la première durée ;
   **caractérisé en ce que** la détermination, par le dispositif de réseau, de la première durée comprend la détermination, par le dispositif de réseau, de la première durée sur la base de données de capacité comprenant l'utilisation du processeur central, CPU, du dispositif de réseau, dans lequel les données de capacité indiquent une capacité de traitement de paquets du dispositif de réseau, et une capacité de traitement de paquets plus faible indique une première durée plus longue ; et **en ce que** la détermination, par le dispositif de réseau, de la première durée sur la base des données de capacité comprend la détermination de la première durée sur la base de l'utilisation du CPU, dans lequel une utilisation du CPU plus élevée indique une première durée plus longue.

2. Procédé selon la revendication 1, dans lequel le paquet DHCP comprend également un champ de type de message DHCP, et le champ de type de message DHCP est utilisé pour identifier le paquet DHCP comme étant le paquet d'annonce.

3. Procédé selon la revendication 1, dans lequel la détermination, par un dispositif de réseau, de la première durée comprend :

   la détermination, par le dispositif de réseau, d'un niveau du premier client sur la base de l'adresse MAC source du premier client ; et
   la détermination, par le dispositif de réseau, de la première durée sur la base du niveau du premier client, dans lequel un niveau plus élevé du premier client indique une première durée plus courte.

4. Procédé selon la revendication 1, dans lequel la détermination, par un dispositif de réseau, de la première durée comprend :
   la détermination, par le dispositif de réseau, de la première durée sur la base d'informations de mise en ligne du premier client, dans lequel les informations de mise en ligne indiquent si le premier client est un client passe en ligne pour la première fois.

5. Procédé selon la revendication 1 ou la revendication 2, dans lequel les données de capacité comprennent une quantité de paquets mis en mémoire tampon par le dispositif de réseau, et la détermination, par le dispositif de réseau, de la première durée sur la base de données de capacité comprend :
   la détermination, par le dispositif de réseau, de la première durée sur la base de la quantité de paquets mis en mémoire tampon, dans lequel une plus grande quantité de paquets mis en mémoire tampon indique une première durée plus longue.

6. Dispositif de réseau, dans lequel le dispositif de réseau est configuré pour réaliser l'une quelconque des revendications 1 à 5.

DHCP client
(DHCP client)

DHCP server
(DHCP server)

DHCP client

FIG. 1

DHCP server
(DHCP server)

Internet

DHCP relay
(DHCP relay)

DHCP client
(DHCP client)

FIG. 2

DHCP client
(DHCP client)

DHCP relay
(DHCP relay)

DHCP server
(DHCP server)

Step (1)
(Discovery
phase)

(1) Discovery
(DHCP discover packet) (broadcast)

(1) Discovery
(DHCP discover) (unicast)

(2) Offer
(DHCP offer packet) (broadcast)

(2) Offer
(DHCP offer) (unicast)

Step (2)
(Offer phase)

Step (3)
(Selection
phase)

(3) Request
(DHCP request packet) (broadcast)

(3) Request
(DHCP request) (broadcast)

(4) Acknowledgment/Negative
acknowledgment
(DHCP ACK packet/DHCP NAK packet)
(broadcast)

(4) Acknowledgment/Negative
acknowledgment
(DHCP ACK packet/DHCP NAK packet)
(broadcast)

Step (4)
(Acknowledgment
phase)

FIG. 3

Advertisement packet (carrying a retransmission interval, for example, first duration)

100

101 DHCP packet retransmission

DHCP client

DHCP packet retransmission

DHCP client

DHCP packet retransmission

DHCP client
(DHCP client)

Network

Appropriate load

Network

102

DHCP relay
(DHCP relay)
(In an overloaded state, a retransmission interval is calculated and advertised, and a blocklist is delivered to a user)

103

DHCP server
(DHCP server)

FIG. 4

200

| System monitoring module | 202 |
| User information management module | 203 |
| Packet transceiver module | 201 |
| Blocklist management module | 205 |
| Retransmission management module | 204 |

FIG. 5

Advertisement packet
(DHCPv4 packet)

| 0 | 7 | 15 | 23 | |
|---|---|---|---|---|
| Packet type (OP) | Hardware type (htype) | Hardware length (hlen) | | Hop count (hops) |
| Transaction ID (xid) (4) | | | | |
| Seconds (secs) (2) | | At least one flag (flags) (2) | | |
| Client IP address (ciaddr) (4) | | | | |
| Your client IP address (yiaddr) (4) | | | | |
| Next server IP address (siaddr) (4) | | | | |
| Relay agent IP address (giaddr) (4) | | | | |
| Client MAC address (chaddr) (16) | | | | |
| Server name (sname) (4) | | | | |
| File (file) (128) | | | | |
| At least one option (options) (64) | | | | |

Option 53
(option53)

Option type

Discovery
(DHCP discover)

Offer
(DHCP offer)

Request
(DHCP request)

Acknowledgment response
(DHCP ACK)

Negative
acknowledgment response
(DHCP NAK)

IP unavailability notification
(DHCP decline)

Release
(DHCP release)

Notification
(DHCP inform)

Retransmission
option

Retransmission
(DHCP Retrans)

FIG. 6

**Advertisement
packet
(DHCPv6 packet)**

```
0                    1                    2                    3
0 1 2 3 4 5 6 7 8 9 0 1 2 3 4 5 6 7 8 9 0 1 2 3 4 5 6 7 8 9 0 1
```

| Packet type (msg-type) | Transaction ID (transaction-ID) |
|---|---|

Options (options) (variable)

Message type

Server location (solicit)

Advertise (advertise)

Request (request)

Confirm (confirm)

Renew (renew)

Rebind (rebind)

Reply (reply)

Release (release)

IP unavailability notification (DHCP decline)

Reconfigure (reconfigure)

Information request (information-request)

Relay forwarding (relay-forw)

Relay reply (relay-reply)

**Retransmission option**

Retransmission (DHCP Retrans)

FIG. 7

300   First client                                    Network
                                                         device

S310: The first client sends a first online request
packet to the network device

S320: The network device receives the first online
request packet sent by the first client

S330: The network device determines first
duration

S340: The network device generates an
advertisement packet, where the advertisement
packet carries the first duration

S350: The network device sends the advertisement
packet to the first client

S360: The first client receives the advertisement
packet

S370: The first client obtains the first duration
carried in the advertisement packet

S380: The first client sends the online request
packet at an interval of the first duration

FIG. 8

400

DHCP client

S401
Is
retransmission
required?

No

Yes

S402
Is an
advertisement packet
received?

No

Yes

S403
Adjust a retransmission interval
based on the advertisement packet

S404
When retransmission
time arrives,
perform retransmission
processing

End

FIG. 9

500

DHCP relay/ DHCP server

S501 — Receive an online request packet from a client

Obtain a blocklist

Blocklist information

S502 — Is it in the blocklist?

Yes → S503 Discard a packet

No ↓

S504 — Record online information

Processing capability monitoring

Online information base of the client

Obtain information

S505 — Is a system overloaded?

No → S506 Processing based on an original online process

Yes ↓

S507 — Calculate retransmission time of the client

S508 — Send an advertisement packet

S509 — Deliver the blocklist to a specific client

S510 — Deliver the blocklist and survival duration → Blocklist information

FIG. 10

600

```
┌─────────────────────────────────────┐
│           Network device            │
│   ┌─────────────────────────────┐   │ 601
│   │      Determining unit       │   │
│   └─────────────────────────────┘   │
│                                     │
│   ┌─────────────────────────────┐   │ 602
│   │      Generation unit        │   │
│   └─────────────────────────────┘   │
│                                     │
│   ┌─────────────────────────────┐   │ 603
│   │       Sending unit          │   │
│   └─────────────────────────────┘   │
└─────────────────────────────────────┘
```

FIG. 11

700

```
┌─────────────────────────────────────┐
│              Client                 │
│   ┌─────────────────────────────┐   │ 701
│   │      Receiving unit         │   │
│   └─────────────────────────────┘   │
│                                     │
│   ┌─────────────────────────────┐   │ 702
│   │      Obtaining unit         │   │
│   └─────────────────────────────┘   │
│                                     │
│   ┌─────────────────────────────┐   │ 703
│   │       Sending unit          │   │
│   └─────────────────────────────┘   │
└─────────────────────────────────────┘
```

FIG. 12

FIG. 13

900

Client

901                905

Processor          Processor

CPU 0              CPU 0

CPU 1              CPU 1

903

Memory        910

Communication 902
bus

Program
code

904

Communication
interface

FIG. 14

1000

Network device    1001

1002

Client

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103701942 A
- CN 104025490 B
- US 2011164587 A1